(19)

**Europäisches Patentamt**

**European Patent Office**

**Office européen des brevets**

(11) **EP 4 356 737 A2**

(12) **EUROPEAN PATENT APPLICATION**

(43) Date of publication:
24.04.2024 Bulletin 2024/17

(21) Application number: 24153974.1

(22) Date of filing: 23.11.2021

(51) International Patent Classification (IPC):
**A01P 1/00** (2006.01)

(52) Cooperative Patent Classification (CPC):
(C-Sets available)
**A01P 1/00; A01N 33/08** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 23.11.2020 EP 20209331

(62) Document number(s) of the earlier application(s) in accordance with Art. 76 EPC:
**21815102.5 / 4 247 164**

(71) Applicant: **Purgos ApS**
**4000 Roskilde (DK)**

(72) Inventors:
• **Mundt, Frank**
**8305 Samsø (DK)**

• **HOLMEGAARD, Jens**
**2840 Holte (DK)**
• **Decru, Steve Sylvère**
**8580 Avelgem (BE)**

(74) Representative: **Patrade A/S**
**Ceresbyen 75**
**8000 Aarhus C (DK)**

Remarks:
This application was filed on 25-01-2024 as a divisional application to the application mentioned under INID code 62.

(54) **BIOCIDE**

(57)    The present invention concerns the use of a secondary or tertiary amine with formula N $R^1R^2R^3$ as biocide, wherein $R^1$ is an unbranched or branched alkyl group with 1-10 C atoms; $R^2$ is H; an unbranched or branched alkyl group with 1-10 C atoms, or an unbranched or branched alcohol group with 1-10 C atoms, and/or $R^3$ is an unbranched or branched alcohol group with 1-10 C atoms. Different methods and compositions comprising said biocide are also disclosed.

EP 4 356 737 A2

(52) Cooperative Patent Classification (CPC): (Cont.)

C-Sets
**A01N 33/08, A01N 25/04, A01N 59/00**

**Description**

**Field of the Invention**

The present invention relates to a biocide, in particular a secondary or tertiary alkyl alkanolamine, such as N-butyldiethanolamine (N-BDA, CAS 102-79-4), compositions comprising such a biocide and its use for a wide range of applications ranging from treatment of water, toothpaste, skin-and face-care products, hand-cleaners, disinfectants, soaps, detergents, clean-wipes, paints, coatings, lacquer, emulsions, impregnation of e.g. wood, cardboard, paper and the like. The invention also concerns products or compositions that are significantly reduced or even free of undesirable, conventional biocides, such as halogen-comprising compounds, heavy metals, phenolic compounds, and isothiazolines such as methylisothiazolinone (MIT), benzisothiazolinone (BIT), methylchloroisothiazolinone (MCI), chloromethyl-methylisothiazolone (CMIT), and octhilinone (OIT), and/or formaldehyde, e.g. by substituting said conventional biocides with N-BDA.

**Background of the Invention**

Many conventional biocides, such as isothiazolines, in particular methylisothiazolinone (MIT), benzisothiazolinone (BIT), methylchloroisothiazolinone (MCI), chloromethyl-methylisothiazolone (CMIT), and octhilinone (OIT), possess undesirable properties, ranging from bad smell to e.g. causing skin irritations, irritations of the respiratory tract, allergies, to disrupted hormonal development in humans and/or other subjects as well as antimicrobial resistance. Apart from problems for the user, this can also be a problem in the manufacturing industry, as these undesirable properties requires special precautionary measures, when handling larger amounts of the conventional biocides, e.g. under product formulation and/or mixing.

In the past, several attempts have been made to introduce biocidal products that are capable of e.g. killing microorganisms but are less harmful to the human health and/or environment. Due to more stringent laws, the use of biocides containing heavy metals, phenolic compounds, halogens and isothiazolines is restricted and can also be forbidden. This is especially the case in the fields of paints, coatings, and thereto related products and compositions, including their methods of manufacture. In this field, products should be volatile organic compound (VOC)-free, according to e.g. EU directive 2004/42/EC and/or ABNT NBR-16388.

Similar trends, laws and/or initiatives may apply for many other fields, ranging from cosmetics to drinking water, were biocides are used.

Accordingly, there is a need for novel biocides that comprises one or more of the following features: low toxicity to humans and/or animals, low allergenicity, classifiable as VOC-free, low in odour, miscible/mixable with water, compatible with existing compositions and products, allowing replacement/substitution of one or more undesirable biocides, compatible with established production methods, as well as their methods of manufacture.

**Summary of the invention**

The present invention was made in view of the prior art described above, and present invention comprises the following aspects:

In a first aspect, the present invention concerns the use of an amine with formula:

$$N\ R^1\ R^2\ R^3$$

as biocide, in particular a secondary or tertiary amine, wherein substituent $R^1$ is an unbranched or branched alkyl group; substituent $R^2$ is H, an unbranched or branched alkyl or an unbranched or branched alcohol group, and substituent $R^3$ is an unbranched or branched alcohol. In some embodiments, R1 is an unbranched or branched alkyl group with 1-6 C atoms, such as methyl, ethyl, propyl, butyl, pentyl, or hexyl, including any isomer thereof; R2 is H; an unbranched or branched alkyl group with 1-6 C atoms, such as ethyl, propyl, butyl, pentyl, or hexyl, including any isomer thereof; or an unbranched or branched alcohol group with 1-5 C atoms, such as methanol, ethanol, propanol, butanol, and pentanol, including any isomer thereof; and R3 is an unbranched or branched alcohol group with 1-5 C atoms, such as methanol, ethanol, propanol, butanol, and pentanol, including any isomer thereof. In some embodiments, the amine is N-butyldiethanolamine.

In a second aspect, the present invention relates to a microbially stable composition or product comprising a biocide as disclosed in the context of the first aspect of the invention, such as N-butyldiethanolamine.

In a third aspect, the present invention pertains to a method for providing microbial stability to a composition or product, comprising the step of adding a biocide according to the first aspect, such as N-butyldiethanolamine to a primary composition in an effective amount.

In a fourth aspect, the present invention concerns a method of providing a microbially stable composition or product comprising the step of replacing one or more conventional biocide(s) with a biocide according to the first aspect, such as N-butyldiethanolamine. The fourth aspect also relates to a method for substituting or replacing a conventional biocide in a composition or product, said method comprising the step of replacing said conventional biocide with a sec. or tert. amine according to the first aspect in an active amount.

In a fifth aspect, the present invention relates to a composition or product provided according to any one of the preceding aspects.

In a sixth aspect, the present invention pertains to a further composition comprising 0.1-99.9% or 1.0-99%% of a composition according to any one of the preceding aspects.

In a seventh aspect, the present invention concerns a receptacle comprising a composition or product according to any one of the preceding aspects.

In summary, the present invention provides hitherto unseen applications and uses for sec. and/or tert. alkyl alkanol amines, which includes replacing or substituting undesired, toxic and/or otherwise unwanted conventional biocides and/or compounds with a biocidal effect or function with a better alternative in the form of as said sec. and/or tert. alkyl alkanol amines as disclosed herein.

**Brief description of the drawings**

**Fig. 1:** Interpreting level of contamination for total biomass including bacteria, yeast and molds (see **Example 6**).
**Fig. 2:** Long term study RT, initial high count
**Fig. 3:** Long term study 32°C, initial high count
**Fig. 4:** Long term study 60°C, initial high count
**Fig. 5:** Long term study, initial "clean sample"

**Detailed Description of the Invention**

*Definitions*

In the context of the present invention, the singular form of a word may include the plural, and vice versa, unless the context clearly dictates otherwise. Thus, the references "a," "an" and "the" are generally inclusive of the plurals of the respective terms. For example, reference to "an ingredient" or "a method" may include a plurality of such "ingredients" or "methods."

Similarly, the words "comprise," "comprises," and "comprising" are to be interpreted inclusively rather than exclusively. Embodiments provided by the present disclosure may lack any element that is not specifically disclosed herein. Thus, a disclosure of an embodiment defined using the term "comprising" is also a disclosure of embodiments "consisting essentially of" and "consisting of the disclosed components". Thus, the term "comprising" is generally to be interpreted as specifying the presence of the stated parts, steps, features, or components, but does not exclude the presence of one or more additional parts, steps, features, or components. For example, a composition comprising a chemical compound may thus comprise additional chemical compounds.

Where used herein, terms like "for example", "e.g." or "such as", particularly when followed by a listing of terms, is merely exemplary and illustrative, and should not be deemed to be exclusive or comprehensive. Any embodiment disclosed herein may be combined with any other embodiment disclosed herein.

Unless expressed otherwise, all percentages expressed herein are by weight of the total weight of the composition. Thus, unless indicated otherwise, "%" indicates % weight/weight (w/w), also called weight %.

In the context of the present invention, the terms "about", "around", "approximately" or the symbol "~" can be used interchangeably, and are meant to comprise variations and/or uncertainties generally accepted in the field, e.g. comprising analytical errors and the like. Thus "about" may also indicate measuring uncertainty commonly experienced in the art, which can be in the order of magnitude of e.g. +/- 1, 2, 5, 10, or even 20 per cent (%). Furthermore, "about" may be understood to refer to numbers in a range of numerals, for example the range of +/- 20, +/- 15, +/- 10, +/- 5, +/- 2, +/- 1, +/- 0.5, +/-0.1% of the referenced number. Moreover, all numerical ranges herein should be understood to include all integers, whole or fractions, within the range.

As used herein, the term "in some embodiments" is meant to comprise both "in one embodiment" and "in some embodiments".

The term "**biocide**" is defined in the European legislation as a chemical substance or microorganism intended to destroy, deter, render harmless, or exert a controlling effect on any harmful organism. The US Environmental Protection Agency (EPA) uses a slightly different definition for biocides as "*a diverse group of poisonous substances including preservatives, insecticides, disinfectants, and pesticides used for the control of organisms that are harmful to human or animal health or that cause damage to natural or manufactured products*". In the context of the present invention, both definitions are applicable, unless not meaningful in view of context. Furthermore, in particular, but not exclusively, in the context of food- or feed-related uses, the term "biocide" may also comprise "preservative", and/or be used interchangeably. Generally, a preservative is a substance or a chemical that is added to products such as food products, beverages, pharmaceutical drugs, paints, biological samples, cosmetics, wood, and the like to prevent decomposition by microbial growth and/or by undesirable chemical changes.

Examples of compounds used as biocides, also called "conventional biocides" herein, may comprise: (i) isothiazolines, in particular methylisothiazolinone (MIT), benzisothiazolinone (BIT), methylchloroisothiazolinone (MCI), chloromethyl-methylisothiazolone (CMIT), and/or octhilinone (OIT); (ii) halogens and/or halogen-comprising compounds and/or compositions, in particular compositions or compounds comprising Cl, Br, and/or J; (iii) heavy metals including salts, in particular Ag, Zn, Zr, Cu, Sn, including inorganic and organic compounds, such as colloidal silver, silver nitrate, mercury chloride, phenyl mercury salts, copper sulphate, copper oxide-chloride; (iv) phenolic biocides (including any see section phenolic biocides below), e.g. phenol(s), cresol(s), xylenol(s), tri- and tetra-methylphenol(s), propyl/butyl phenol(s), methyl resorcinol(s), naphthols, neutral hydrocarbon tar oils, bis-phenols, chlorophenols, trichlor-phenol(s), pentachlorophenol, triclosan 2-phenylphenol; and/or (v) other compounds, such as formaldehyde.

Phenolic biocides: Traditionally, phenols have been solubilised into a usable form using soaps. Simple soaps, such as potassium laurate, are susceptible to hard water and hence synthetic detergents are often used such as sulphonated castor oil, alkylbenzene sulphonates or alkylether sulphates. The early coal tar disinfectants were introduced in the 1880s based on three types of product from coal tar distillates. These were used to produce the so-called, "clear fluids", "black fluids" and "white fluids". Clear fluids were based on derivatives such as cresols (e.g. Lysol) and xylenols (e.g. Sudol) solubilised in soap or surfactant to give a clear aqueous dilution. Black fluids contain a large number of phenolic derivatives which distil over as high boiling tar acids (250-310°C). These include tri- and tetra-methylphenols, propyl/butyl phenols, methyl resorcinols and naphthols plus neutral hydrocarbon tar oils. Again, these may be solubilised with soaps or surfactants to form clear black liquids which readily form emulsions when added to water. They are effective under heavy soiling conditions against both bacteria and fungi. White fluids also contain high boiling tar acids, but this time they are formulated into emulsion concentrates by soap and emulsion stabilisers, such as casein, xanthan gums, etc. They are also effective in conditions of heavy soiling. Substitution of an alkyl group of up to six carbon atoms into the phenol ring (preferably in the para-position) increases the biocidal activity, probably by increasing surface activity. Halogenation also increases the anti-bactericidal activity of a phenol, for example the tri-chlorophenols which are popular antiseptics and effective fungicides. However, some products, such as the wood preservative pentachlorophenol, have been banned in Europe due to their persistence in the environment and detrimental effect on sewage treatment bacteria. A combination of alkyl and halogen substitution into the phenol confers the greatest antibacterial activity, when the alkyl group is ortho- to the phenol group and the halogen is para- to it. Bis-phenols, compounds containing two phenyl groups, have been developed as commercial biocides. The two phenol groups may be connected directly or separated by a methylene group or an oxygen or sulphur atom. Examples are dichlorophen and triclosan. Dichlorophen has been used as a preservative for toiletries, textiles and cutting oils and to prevent bacterial growth in water-cooling systems. Triclosan is widely used as a preservative in many formulated products. It is also used in handcleaning gels and medicated soaps. Other products, such as 2-phenylphenol, are effective fungicides and bactericides, sometimes used in pine-type disinfectants.

Heavy metals and their salts are often very toxic and/or environment-hazardous bactericides and therefore their use is strongly discouraged or prohibited.

In particular, a "biocide" also called "biocidal agent" herein can be one or more of: an antimicrobial, such as a bacteriocide (also called bactericide), a fungicide, a sporicide, an algaecide (also called algicide), an antiviral, and/or a stabilizing agent, including any combination(s) thereof.

According to the *Biocidal Products Regulation (EU) 528/2012),* classification of biocides can be divided into 4 main groups, each comprising several subgroups, and a total of 22 product types:

*MAIN GROUP 1: Disinfectants and general biocidal products*

Product-type 1: Human hygiene biocidal products
Product-type 2: Private area and public health area disinfectants and other biocidal products
Product-type 3: Veterinary hygiene biocidal products
Product-type 4: Food and feed area disinfectants

Product-type 5: Drinking water disinfectants

*MAIN GROUP 2: Preservatives*

Product-type 6: In-can preservatives
Product-type 7: Film preservatives
Product-type 8: Wood preservatives
Product-type 9: Fibre, leather, rubber and polymerised materials preservatives
Product-type 10: Masonry preservatives
Product-type 11: Preservatives for liquid-cooling and processing systems
Product-type 12: Slimicides
Product-type 13: Metalworking-fluid preservatives

*MAIN GROUP 3: Pest control*

Product-type 14: Rodenticides
Product-type 15: Avicides
Product-type 16: Molluscicides
Product-type 17: Piscicides
Product-type 18: Insecticides, acaricides and products to control other arthropods
Product-type 19: Repellents and attractants
Product-type 20: Control of other vertebrates

*MAIN GROUP 4: Other biocidal products*

Product-type 21: Antifouling products
Product-type 22: Embalming and taxidermist fluids

In the context of the present invention, in some embodiments the biocide can also be a biocide selected from main group 1, 2, 3, and 4, including any combinations thereof. In some embodiments, the biocide is selected from product type 1-22, including any combination thereof. In some embodiments, the biocide is selected from product type 1-5, including any combination thereof. In some embodiments, the biocide is selected from product type 6-13, including any combination thereof. In some embodiments, the biocide is selected from product type 14-20, including any combination thereof. In some embodiments, the biocide is selected from product type 21 and/or 22.

A use of a biocide according to the present invention can also be classified in relation to the degree or form of its exposure and/or interaction with a user or subject (human or animal): (A) No, or very limited contact/exposure (e.g. use as paint or wood preservative); (B) Direct interaction/contact with the user (e.g. use in cosmetics, such as mascara, creams and the like; and C) Ingestion by the user/subject. e.g. by consumption of feed or food, or medicine.

In some embodiments, the biocide according to the present invention can be used for user situation (A) only. In some embodiments, the biocide can be used for user situation (B). In some embodiments, the biocide can be used for user situation (C). In some embodiments, the biocide according to the present invention can be used for any one of user situations (A), (B), and/or (C), including any combination thereof.

In some embodiments, the biocide is an active ingredient in a pharmaceutical.

In some embodiments, the biocide is an active ingredient in pesticide, e.g. in pest control in a field, such as control of one or more fungi in a cereal field.

An "antimicrobial" or "antimicrobial agent" is a compound or composition that may kill microorganisms (also called "microbicidal"). It can also be a compound or composition that stops the growth of a microorganism (also called biostatic). Often, antimicrobial agents can be classified as disinfectants (which kill a wide range of microbes usually on a surface or in a fluid), antiseptics (which are e.g. applied to living tissue and help reduce infection during surgery), and antibiotics (capable of destroy microorganisms e.g. within the body of a subject).

A "bactericide" or "bacteriocidal agent" is a compound or composition capable of killing bacteria. Bactericides can e.g. be disinfectants, antiseptics, or antibiotics.

A "fungicide" or "fungicidal agent" is a compound or composition capable of killing fungi or molds. Fungicides can e.g. be disinfectants, antiseptics, or antibiotics.

A "sporicide" or "sporicidal agent" is a compound or composition capable of killing spores, such as bacterial and/or fungal spores. Sporicides can e.g. be disinfectants, antiseptics, or antibiotics.

The terms "algaecide" and "algicide" can be used interchangeably and refer to a compound or composition capable of killing and/or preventing the growth of algae.

The terms "antiviral", "antiviral agent", and "viricide" can be used interchangeably and refer to a compound or composition of killing and/or preventing reproduction of vira, either inside or outside a body and/or cell.

A "stabilizing agent" or "microbially stabilizing agent" in the context of the present invention can be substance or composition providing a biostatic effect, i.e. stopping growth of a microorganism.

"Short-term elimination of microbial activity" is meant to comprise a reduction in viable cell count (VCC) by at least 3, 4, 5, or more log units. This may also be called "disinfection" or "sterilization". "Short term" is usually meant to comprise a reduction of VCC within a few hours or days, such as within 6, 12, 24 or 48h.

"Long-term provision of an essentially microorganism-free environment is meant to comprise the provision of an environment with usually less than 10 or 100 VCC/ml. Commonly, The terms" VCC"(viable cell count) and "CFU (colony forming units) can be used interchangeably.

"Long term" is usually meant to comprise a time period corresponding to e.g. the shelf life of a product, often days, weeks, 1 or more month, 6m or more, or even one or more years.

"Resistance to postproduction contamination" is meant the provision of an environment, where microorganisms either are not growing, or growing very slowly after production, and usually only to a low VCC/ml count. In particular, this may comprise storage after production, and/or a situation, where a receptacle comprising a product is opened and closed again, such as in a user situation when e.g. applying a cosmetical or paint, commonly stored in a container with a lid, such as a screw cap or the like. "Resistance to postproduction contamination" can e.g. be an increase in shelf life after opening that is significantly longer than a control without a biocide, such as NBDA. This increase in shelf life can e.g. be 2 x, 5 x, 10 x, or more than 10 x longer than the product without biocide.

In the context of the present invention, the term "**N-butyldiethanolamine**" (abbreviated N-BDA or NBDA), is meant to comprise: N-butyl-2,2'-iminodiethanol, 2-(N-butyl-N-2-hydroxyethylamino)ethanol, N-butyl-N,N-bis(2-hydroxyethyl)amine, 2-butyl(2-hydroxyethyl)amino]ethan-1-ol, 2-[butyl(2-hydroxyethyl)amino]ethanol, butylbis(2-hydroxyethyl)amine, N-butyldiethanolamine, 2,2'-(butylimino)bisethanol, 2,2-(butylimino)diethanol, 2,2'-(butylimino)diethanol, 2,2'-(N-butylimino)diethanol, 2,2'-butyliminodiethanol, ethanol, 2,2'-(butylimino)bis-, ethanol, 2,2'-(butylimino)di-, N,N'-ethanolbutylimine, N,N- bis(2-hydroxyethyl)butylamine, N-N-butyldiethanolamine and/or a compound with CAS number 102-79-4.

N-BDA has a molecular weight of 161.24 g/mol. It is a moderate base (10% N-BDA in water has a pH of around 11.1. N-BDA is essentially odourless. Detailed information concerning N-BDA and its physical, chemical, or other properties of can e.g. be found here: https://pubchem.ncbi.nlm.nih.gov/compound/N-Butyldiethanolamine. N-butyldiethanolamine is commercially available as a 99% in Vantex T ™ and is commonly used as a neutralizing additive of paints and coatings. Further it can be used as supplementary pigment dispersant that enhance tint strength, grind and paint stability and overall paint performance. Also, adhesion to substrates may be improved by use of tertiary amines. This particular tertiary amine can be used for formulating paints, coatings and compounds that meets or exceeds the AgBB, Ecolabel, The Swann label, Blue Angel label and Greenguard Standards. The US EPA testing Method 24 shows this material does not contribute to the VOC content. N-butyldiethanolamine is not considered a VOC in accordance with the ISO 11890-2:2013 based on VOC definitions in EU directive 2004/42/EC and ABNT NBR-16388.

Unexpectedly, the inventors have realized that secondary and/or tertiary amines comprising at least one alkyl- and one alcohol-substituent as disclosed herein possess a biocidal effect. As an example, and not to be construed as limiting for the present invention, N-butyldiethanolamine possesses such a biocidal effect. This is surprising, as this effect is not described in the literature, and in particular because the toxicity of N-BDA is low, with a LD50 (rat, oral) of 4250 mg/kg. In comparison, the LD50 (rat, oral) for table salt (NaCl) is 3000 mg. N-BDA is also low in VOC and has a significantly reduced odour compared to e.g. conventional biocides, such as those mentioned herein.

Concerning the use of biocides for surfactant stabilized dispersions, use of ionic compounds like benzalkonium chloride (marketed as Rodalon®) are undesirable, as they will add ions such as cations to the dispersion with the risk of providing eminent stability problems such as e.g. coagulation. Further, the biocidal effect and/or action of benzalkonium type biocides show a reduced biocidal action when combined with detergents, soaps, or other surface-active additives, in contrast to the secondary and/or tertiary amines with biocidal effect presented herein.

In a first aspect, the present invention concerns the use of an amine with formula:

$$N\ R^1\ R^2\ R^3$$

as biocide, in particular a secondary or tertiary amine, wherein
substituent $R^1$ is an unbranched or branched alkyl group; substituent $R^2$ is H, an unbranched or branched alkyl or an unbranched or branched alcohol group, and
substituent $R^3$ is an unbranched or branched alcohol.

For the avoidance of doubt, "amine" in the context of the present invention is meant to comprise "secondary amine" and/or tertiary amine, unless clearly indicated otherwise. Generally, an amine with biocidal effect according to the present invention can be classified as a secondary or tertiary alkyl-alkanol amine, i.e. a secondary amine with one alkyl and one alcohol, or a tertiary amine with one alkyl and two alcohols, or a two alkyls and one alcohol. Any alkyl and/or alkanol group can be branched or unbranched. In some embodiments, an alkanol group may comprise more than one OH groups, such as an alkanol with two or more OH groups. In some embodiments concerning a tertiary alkyl alkanolamine comprising two alkanol groups, one alkanol substituent may have only one OH group, while the other has two or more OH groups. In some embodiments, both alkanol substituents have two or more OH groups each.

Without wanting to be bound by any theory, it is believed that the biocidal effect is related to the presence of both hydrophilic and hydrophobic groups or functionalities in the said secondary or tertiary alkyl-alkanolamines. This can e.g. be a soap-like functionality, acting on membranes or lipid layers in a microorganism. Furthermore, it can be advantageous to adjust the length or nature (branched/unbranched) of the alkyl or alkanol groups with respect to the product, to which the biocide is intended to be used with. Likewise, the use of two instead of only one OH group will generally increase the hydrophilicity, and *vice versa.*

The first aspect may also concern the use of a secondary or tertiary amine with formula N $R^1$ $R^2$ $R^3$ as biocide, wherein $R^1$ is an unbranched or branched alkyl group with 1-10 C atoms; $R^2$ is H; an unbranched or branched alkyl group with 1-10 C atoms, or an unbranched or branched alcohol group with 1-10 C atoms, and/or $R^3$ is an unbranched or branched alcohol group with 1-10 C atoms.

In particular, the first aspect may concern the use of a secondary or tertiary amine with formula N $R^1$ $R^2$ $R^3$ as biocide, wherein:

- $R^1$ is an unbranched or branched alkyl group with 1-6 C atoms, such as methyl, ethyl, propyl, butyl, pentyl, or hexyl, including any isomer thereof;
- $R^2$ is H; an unbranched or branched alkyl group with 1-6 C atoms, such as ethyl, propyl, butyl, pentyl, or hexyl, including any isomer thereof; or an unbranched or branched alcohol group with 1-5 C atoms, such as methanol, ethanol, propanol, butanol, and pentanol, including any isomer thereof; and
- $R^3$ is an unbranched or branched alcohol group with 1-5 C atoms, such as methanol, ethanol, propanol, butanol, and pentanol, including any isomer thereof.

In some embodiments, the total number of C atoms $R^1$ + $R^2$ + $R^3$ of the amine is 2-20, 2-17, 5-18, 6-14, 7-12, 8-10, 6, 7, 8, 9, or 10. Generally, a larger number of C atoms will increase the boiling point of the compound, which can be advantageous with respect to low a VOC, which may be advantageous in some embodiments. However, a lower number of C atoms can be preferred in other embodiments, as these may provide a more hydrophilic compound.

In some embodiments, the amine is a **tertiary amine,** and $R^1$ is an unbranched or branched alkyl group with 1-6 C atoms; $R^2$ an unbranched or branched alkyl group with 2-6 C atoms; or an unbranched or branched alcohol group with 1-5 C atoms; and $R^3$ is an unbranched or branched alcohol group with 1-5 C atoms.

In some embodiments, the amine is a tertiary amine, and $R^1$ is an unbranched or branched alkyl group with 2-6 C atoms; $R^2$ an unbranched or branched alkyl group with 2-6 C atoms; or an unbranched or branched alcohol group with 1-5 C atoms; and/or $R^3$ is an unbranched or branched alcohol group with 1-5 C atoms.

Thus, in some embodiments, the tertiary amine can be a di-alkyl mono-alkanolamine, or a mono-alkyl di-alkanolamine. Generally, unless indicated otherwise herein, "tertiary amine" is to be understood herein as dialkyl mono-alkanolamine or a monoalkyl dialkanolamine. Generally, unless indicated otherwise, the tertiary amine may comprise two alkyls and one alcohol substituents, or one alkyl and two alcohols substituents. These two alkyls can have the same number of C atoms, or they can have different number of C atoms, such as differing by 1, 2, 3, 4 or 5 C atoms. When having the same number of C atoms, the alkyls in $R^1$ and $R^2$ can be identical or different isomers. Likewise, the two alcohols can have the same number of C atoms, or they can have different number of C atoms, such as differing by 1, 2, 3, or 4 C atoms. When having the same number of C atoms, the alcohols $R^2$ and $R^3$ can be identical or different isomers. Furthermore, each alkanol group(s) may comprise one or more OH groups.

In some embodiments, the tertiary amine is a dialkyl monoalkanolamine. In some embodiments, the tertiary amine is an (mono)alkyl dialkanolamine. In some embodiments, such tertiary amine may comprise substituents such as $R^1$ with 2-6 or 3-5 C atoms, $R^2$ with 3-6 C atoms, and/or $R^3$ with 1-4 C atoms, including any combination(s) thereof. In some embodiments, $R^1$ has 3-6 C atoms, $R^2$ has 1-3 C atoms, and/or $R^3$ has 1-3 C atoms, including any combination(s) thereof. In some embodiments, $R^1$ has 4 C atoms, $R^2$ has 2-4 C atoms, and/or $R^3$ has 2 C atoms, including any combination(s) thereof. In some embodiments, $R^1$ has 3-6 C atoms. In some embodiments, $R^2$ has 3-6 C atoms. In some embodiments, $R^3$ has 1-4 C atoms. In some embodiments, $R^1$ is n-butyl, sec-butyl, isobutyl, or tert-butyl; $R^2$ is methanol, ethanol (prim or sec); and/or $R^3$ is methanol, ethanol (prim or sec), including any combination(s) thereof. In some embodiments, $R^1$ is n-butyl, sec-butyl, isobutyl, or tert-butyl, $R^2$ is ethanol (prim or sec), and $R^3$ is ethanol (prim or sec). In some embodiments, $R^1$ is n-butyl, sec-butyl, isobutyl, or tert-butyl, $R^2$ is ethanol (prim), and $R^3$ is ethanol (prim). However, in some embodiments, such as any embodiment mentioned in this paragraph, any one of $R^1$, $R^2$, and/or $R^3$ may comprise more than 5 or 6 C atoms, as well as any one of $R^2$, and/or $R^3$ may comprise more than 1 OH groups.

In some embodiments, the tertiary amine is N-methyl diethanolamine (CAS 105-59-9), N-ethyl diethanolamine (CAS 139-87-7), N-propyl diethanolamine (CAS 6735-35-9), N-butyldiethanolamine (CAS 102-79-4), N-t-butyl diethanolamine (CAS 2160-93-2). In some embodiments, the tertiary amine is dimethylethanolamine (CAS 108-01-0), diethylethanolamine (CAS 100-37-8), dipropylaminoethanol (CAS 3238-75-3), diisopropylethanolamine (CAS 96-80-0), or dibutylethanolamine (CAS 102-81-8). In some embodiments, the tertiary amine is N-butyldiethanolamine (CAS 102-79-4).

In some embodiments, the secondary amine is alkyl alkanolamine. Unless indicated otherwise "secondary amine" is to be understood herein as alkyl alkanolamine, unless indicated otherwise. Thus, generally and unless indicated otherwise, a **secondary amine** according to the present invention has one alkyl and one alcohol substituent. Both substituents $R^1$ and $R^3$ may have the same number of C atoms, or they can have different number of C atoms, such as differing by 1, 2, 3, 4 or 5 C atoms. $R^1$ and $R^3$ can be branched or unbranched. Furthermore, $R^3$ may comprise more than on OH group(s). In some embodiments, $R^1$ and/or $R^3$ may comprise more than 5 or 6 C atoms. In some embodiments, the secondary amine has a substituent $R^1$ in the form of an unbranched or branched alkyl group, e.g. with 2-6 C atoms; $R^2$ is H; and $R^3$ is an unbranched or branched alcohol group, e.g. with 1-5 C atoms.

In some embodiments, such secondary amine may comprise substituents such as $R^1$ with 2-6 or 3-5 C atoms, $R^2$ = H, and/or $R^3$ with 1-4 C atoms, including any combination(s) thereof. In some embodiments, $R^1$ has 3-6 C atoms, and/or $R^3$ has 1-3 C atoms. In some embodiments, $R^1$ has 4 C atoms, and/or $R^3$ has 2 C atoms. In some embodiments, $R^3$ has 1-4 C atoms. In some embodiments, $R^1$ is n-butyl, sec-butyl, isobutyl, or tert-butyl; and/or $R^3$ is methanol, ethanol (prim or sec), including any combination(s) thereof. In some embodiments, $R^1$ is n-butyl, sec-butyl, isobutyl, or tert-butyl, and/or $R^3$ is ethanol (prim or sec). In some embodiments, $R^1$ is n-butyl, sec-butyl, isobutyl, or tert-butyl, and/or $R^3$ is ethanol (prim). However, in some embodiments, such as any embodiment mentioned in this paragraph, $R^1$ and/or $R^3$ may comprise more than 5 or 6 C atoms. Furthermore, $R^3$ may comprise more than 1 OH groups.

In some embodiments, the amine is a secondary amine, and $R^1$ is an unbranched or branched alkyl group with 1-6, 2-5, or 3-4 C atoms; $R^2$ is H; and $R^3$ is an unbranched or branched alcohol group with 1-5, or 2-4 C atoms.

In some embodiments, the secondary amine is (i) methyl monoalkanolamine, such as methyl monomethanolamine, methyl monoethanolamine, methyl monopropanolamine, methyl monobutanolamine, or methyl pentanolamine; (ii) ethyl monoalkanolamine, such as ethyl monomethanolamine, ethyl monoethanolamine, ethyl monopropanolamine, ethyl monobutanolamine, or ethyl pentanolamine; (iii) propyl monoalkanolamine, such as propyl monomethanolamine, propyl monoethanolamine, propyl monopropanolamine, propyl monobutanolamine, or propyl pentanolamine; (iv) butyl mono-alkanolamine, such as butyl monomethanolamine, butyl monoethanolamine, butyl monopropanolamine, butyl monobutanolamine, or butyl pentanolamine; or (v) pentyl monoalkanolamine, such as pentyl monomethanolamine, pentyl monoethanolamine, pentyl monopropanolamine, pentyl monobutanolamine, or pentyl pentanolamine.

Generally, a desired **biocidal effect** can be provided using a secondary or tertiary amine as disclosed above. However, a similar, or even improved biocidal effect may be provided by the use of two different secondary and/or tertiary amines, or more than two secondary and/or tertiary amines. Thus, in some embodiments, the biocidal effect is provided by more than one sec. or tert. amine as disclosed herein, such as above. In some embodiments, the biocidal effect is provided by a combination comprising or consisting of one or more secondary amine(s), one or more tertiary amine(s), or a combination of one or more secondary amine(s) and one or more tertiary amine(s), said secondary and/or tertiary amine(s) being as disclosed herein. In some embodiments comprising such combination(s), the one or more tertiary amine(s) is/are selected from: one or more dialkyl monoalkanolamines; two monoalkyl dialkanolamines; dialkyl monoalkanolamine and monoalkyl dialkanolamine; dialkyl monoalkanolamine and alkyl monoalkanolamine; or monoalkyl dialkanolamine and alkyl monoalkanolamine.

However, in some embodiments, a satisfactory biocidal effect may be provided by a single sec. or tert. amine, such as N-butyldiethanolamine.

Concerning the "biocide and/or "biocidal effect", reference is made to the definitions, explanations and systematics given herein. Furthermore, "biocide" is meant to comprise a sec. or tert. amine, alone or in combination with biocidal properties as disclosed herein. Generally, the phrase "the biocide, such as N-butyldiethanolamine" is not to be construed as limiting to the scope of the invention.

In some embodiments, the biocide, such as N-butyldiethanolamine, is an antimicrobial agent. In some embodiments, the antimicrobial agent is one or more of: bactericide, fungicide, sporicide, algaecide, antiviral, microbially stabilizing agent, including any combination thereof.

In some embodiments, the biocide such as N-butyldiethanolamine, provides one or more of: short-term elimination of microbial activity (reduction in viable cell count (VCC) by at least 2, 3, 4 or more log units), long-term provision of an essentially microbe-free environment (e.g. < 10, 100 VCC/ml (or g), and resistance to postproduction contamination, including any combination thereof.

In some embodiments, the biocide such as N-butyldiethanolamine, is used in one or more composition or product, such as is a personal care product, home care product, cosmetical, paint, glue, coating, sol-vent, spray, dispersion, emulsion, suspension, suspoemulsion, soap, detergent, household or industrial cleaning agent, paste, gel, lubricant, cooling fluid, heat ex-change fluid, contact-cooling system, aqueous system, glue, precoat, topcoat, peel-able coat, primer, metal primer, paint, stoving paint, coating for printed circuit boards, coating for singular application as well as compound manufacture of film, foil, woven or nonwoven textile, carpet backing, flooring solution, binder for fibres, artificial grass, concrete sealer, dust binder, sound dampening compound coating for use in architectural or in situ mechanical systems, feed product, food product, pesticide, medicament, or pharmaceutical.

In some embodiments, the biocide such as N-butyldiethanolamine, and/or its use can be classified as any one of Main Group 1-4 according to Biocidal Product Regulation (EU) 28/2012.

In some embodiments, the biocide, such as N-butyldiethanolamine, and/or its use can be classified as any one of Product Type 1-22 according to Biocidal Product Regulation (EU) 28/2012, including any combination thereof.

In some embodiments, the biocide, such as N-butyldiethanolamine, is used in an aqueous system.

In some embodiments, the aqueous system is selected from the group consisting of: liquid, dispersion, emulsions, suspension, suspoemulsions, paste, gel, lubricant, cooling fluid and contact-cooling systems, including any combination(s) thereof.

In some embodiments, the aqueous system comprises a binder.

In some embodiments, the binder comprises or consists essentially of a biological degradable polymer.

In some embodiments, the binder comprises, consists essentially, or consists of polyvinyl butyral (PVB), recycled PVB (rPVB), modified PVB (mPVB), and/or crosslinked PVB (PVBX), including any combination thereof.

In some embodiments, a biocidal effect is provided without the need for one or more further biocide(s).

In some embodiments, said further biocide is a conventional biocide, such as a biocide selected from the group consisting of: (i) isothiazolines, in particular methylisothiazolinone (MIT), benzisothiazolinone (BIT), methylchloroisothiazolinone (MCI), chloromethyl-methylisothiazolone (CMIT), and/or octhilinone (OIT); (ii) halogens and/or halogen-comprising compounds and/or compositions, in particular compositions or compounds comprising Cl, Br, and/or J; (iii) heavy metals including salts, in particular Ag, Zn, Zr, Cu, Sn, including inorganic and organic compounds, such as colloidal silver, silver nitrate, mercury chloride, phenyl mercury salts, copper sulphate, copper oxide-chloride; (iv) phenolic biocides, e.g. phenol(s), cresol(s), xylenol(s), tri- and tetra-methylphenol(s), propyl/butyl phenol(s), methyl resorcinol(s), naphthols, neutral hydrocarbon tar oils, bis-phenols, chlorophenols, trichlorphenol(s), pentachlorophenol, triclosan 2-phenylphenol; and/or (v) other compounds, such as formaldehyde.

In some embodiments, the biocide, such as N-butyldiethanolamine, is provided in a concentration of 0.01-10.0, 0.1-5.0, 0.2-2.0, 0.4-1.5, or 0.5-1.0% by weight, and/or at least 0.01, 0.02, 0.05, 0.1, 0.2, 0.5, 1.0, 2.0, 5.0% by weight, or more.

In some embodiments, the biocidal effect of a biocide, such as N-butyldiethanolamine, can be improved by the addition of a peroxide or peroxide stabilized compound. In some embodiments, the use of a biocide such as N-butyldiethanolamine, may comprise the use and/or provision of one or more peroxide, such as hydrogen peroxide, a peroxide and/or one or more peroxide comprising stabilized compound, including any combinations thereof. In some embodiments, said peroxide is provided in a concentration of 0.001-2.0, 0.002-1.5, 0.005-1.0, 0.01-1.0, or 0.05-0.5% by weight, and/or at least 0.001, 0.002, 0.005, 0.01, 0.2, 0.5, 1.0, or 0.05-0.5% per weight, or more. It is considered advantageous that the biocidal effect of the sec. or tert. amine, such as NBDA is compatible with hydrogen peroxide, peroxides and peroxide containing stabilized compounds. This allows balancing the short-term fast elimination of microbial activity with the long-term preservation of a microbe-free (bacteria free, yeast-, mold- and/or fungi-free) environment, also in a 'tuneable' degree resistant to postproduction contamination.

The use of a biocide as disclosed herein, such as N-butyldiethanolamine, allows for the replacement and/or substitution of conventional, and often undesirable biocides. In some embodiments, one or more conventional biocide(s) is/are substituted at least in part by the biocide according to the invention, such N-butyldiethanolamine. In some embodiments, at least 25% or more, such as 50% or more, such as 60% or more, 70% or more, 80% or more, 90% or more, 95% or more, 98% or more, or 100% of a conventional biocide is substituted by a biocide according to the invention, such as N-butyldiethanolamine.

In a second aspect, the present invention relates to a microbially stable composition or product comprising a biocide as disclosed in the context of the first aspect of the invention, such as N-butyldiethanolamine. Generally, in microbially stable and/or stabilized compositions, microbial stability is provided by one or more biocide(s) according to the invention, such as a sec. or tert. amine according to the first aspect.

In some embodiments, "microbially stable" or thereto related terms can be defined as: elimination and/or reduction of microbial activity (such as a reduction in viable cell count (VCC) by at least 3, 4, 5 or 6 log units); long-term provision of a microbe-free environment (< 10 VCC ml or g), and/or resistance to postproduction contamination, including any combination thereof. In some embodiments, "microbially stable" may also mean the elimination of microbial growth/proliferation of microorganisms.

Generally, the terms "composition" and "product" can be used interchangeably, in the context of the present invention, unless the context dictates otherwise.

In some embodiments, said microbially stable composition is an aqueous composition, such as a composition comprising significant amounts of water, such as at least 10, 20 or more than 20% water. Often, an aqueous composition comprises water as the main liquid component and/or fluid e.g. at room temperature.

In some embodiments, said composition or aqueous composition is a liquid, dispersion, emulsions, suspension, suspoemulsions, paste, gel, lubricant, cooling fluid and contact-cooling systems, including any combination(s) thereof. Further examples of such compositions and/or uses are provided herein.

In some embodiments, said composition comprises a binder.

In some embodiments, the binder comprises, consists essentially, or consists of a biological degradable polymer.

In some embodiments, the binder said composition comprises, consists essentially, or consists of polyvinyl butyral (PVB), recycled PVB (rPVB), modified PVB (mPVB), and crosslinked PVB (PVBX). In some embodiments, the PVB(s) may comprise a plasticizer and/or a plasticizer system. This can be common for recycled PVBs or other polymers, in particular brittle polymers.

In some embodiments, microbial stability is provided by a biocide, as disclosed herein, such as N-butyldiethanolamine, or a combination of said biocide (e.g. N-butyldiethanolamine) and a peroxide, such as hydrogen peroxide. In some embodiments, microbial stability is provided without the need of a further biocide.

In some embodiments, said composition does not comprise one or more conventional biocide(s).

In some embodiments, said microbially stable composition comprises, apart from the biocide (e.g. N-butyldiethanolamine), one or more peroxide compound, such as hydrogen peroxide, a peroxide, and/or one or more peroxide comprising stabilized compound, including any combinations thereof.

In some embodiments, the biocide, such as N-butyldiethanolamine, is provided in a concentration of 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

In some embodiments, one or more peroxide is provided in a concentration of 0.001-2.0, 0.002-1.5, 0.005-1.0, 0.01-1.0, or 0.05-0.5% per weight, and/or at least 0.001, 0.002, 0.005, 0.01, 0.2, 0.5, 1.0, or 0.05-0.5% per weight, or more.

In some embodiments, a microbially stable, biocide-, such as N-butyldiethanolamine-, comprising composition does not comprise one or more organic compound(s) having an initial boiling point of 250°C or below measured at a standard atmospheric pressure of 101.3 kPa.

In some embodiments, the microbially stable composition or product meets or exceeds on or more requirement(s) for AgBB, Ecolabel, The Swann label, Blue Angel label and/or Greenguard Standard(s), see e.g.: https://www.eco-institut.de/en/portfolio/agbb-schema/; http://ec.europa.eu/ecat/; https://www.ecolabel.dk/da; https://www.blauer-en-gel.de/en; and/or http://www.ecolabelindex.com/ecolabel/greenguard.

In some embodiments, said composition microbially stable composition is a personal care product, home care product, cosmetical, paint, glue, coating, sol-vent, spray, dispersion, emulsion, suspension, suspoemulsion, soap, detergent, household or industrial cleaning agent, paste, gel, lubricant, cooling fluid, heat ex-change fluid, contact-cooling system, aqueous system, glue, precoat, topcoat, peel-able coat, primer, metal primer, paint, stoving paint, coating for printed circuit boards, coating for singular application as well as compound manufacture of film, foil, woven or nonwoven textile, carpet backing, flooring solution, binder for fibres, artificial grass, concrete sealer, dust binder, sound dampening compound coating for use in architectural or in situ mechanical systems, feed product, food product, pesticide, medicament, or pharmaceutical.

In some embodiments, such compositions and/or products are one or more of: heavy metal free, halogen-free, formaldehyde-free, phenolics-free, isothiazolinone- (e.g. MIT, BIT, CMIT, OIT)-free, and VOC-free, such as by the use of sec. or tert. amine with biocidal effect according to the invention.

In some embodiments, said composition is a dispersion comprising polyvinyl butyral (PVB), such as one or more of rPVB, mPVB, and/or PVBX, wherein microbial stability is provided by one or more secondary and/or tertiary amine(s) according to the invention, and/or a combination of one or more secondary and/or tertiary amine(s) and a peroxide, such as hydrogen peroxide and/or one or more peroxide stabilized compound (s). In some embodiments, the dispersion comprises 1-70, 2-60, or 5-55% polymer, such as PVB, acrylics, and/or PU and the like. In some embodiments, the dispersion comprises 0.2-40, 0.5- 30, or 1-20% emulsifier, such as emulsifier(s) selected from fatty acid soaps, unsaturated C3-C22 carboxylic acid(s), and saturated C3- C22 carboxylic acid(s), including any combination thereof. In some embodiments, the emulsifier can be selected from one or more of: potassiumoleate, ammoniumoleate, sodiumoleate, ricinoleate (e.g. potassium-, ammonium-, and/or sodiumricinoleate). Generally, the emulsifier can be a fatty acid derived from a plant, usually a salt of said fatty acid, such as plant usually used for oil production, such as oil palm trees, castor bean, canola, and the like. Commonly, such fatty acids can be provided on an industrial scale hydrolysis of triglycerides, with the removal of glycerol from plant oil.

In some embodiments, microbial stability of a dispersion, or other composition or product is provided by N-butyl diethanolamine.

In some embodiments, the biocide according to the invention, such as N-butyldiethanolamine can be used in a dispersion, emulsion, suspension, suspoemulsion, gel, paste, liquid, and may, or may not, comprise is recycled PVB (rPVB), crosslinked PVB (PVBX), otherwise modified PVB. In some embodiments, the recycled PVB is provided or sourced from recycled PVB foil from automotive scrap, laminated safety glass, acoustic, architectural and bullet proof architectural glass. In some embodiments, the amount of polymer in such compositions is in the range from 5% to 55% by weight. In some embodiments, the amount of emulsifier selected from fatty acid soaps, or saturated or unsaturated C3 to C22 carboxylic acids in an amount of 1% to 20% by weight. In some embodiments, the emulsifier is selected from one or more of: oleate, such as potassiumoleate, ammoniumoleate, sodiumoleate, and/or ricinoleate.

In some embodiments, the biocide according to the first aspect can be added to a feed and/or food product. In some embodiments, the biocide according to the present can be added to a pharmaceutical or cosmetical. In some embodiment, the biocide according to the present invention can be added to a biological sample.

In a third aspect, the present invention pertains to a method for providing microbial stability to a composition, comprising the step of adding a biocide according to the first aspect, such as a sec. or tert. amine, such as N-butyldiethanolamine to a primary composition in an effective amount.

In the context of the present invention, an "effective amount" can be an amount that shows a measurable biocidal effect. It is submitted that the person skilled in the art will be able to determine the "effective amount", e.g. by comparison with a negative control, a control comprising a different biocide, and/or by conducting experiments with increasing dosages of the biocide to be tested. The effective amount may vary in dependence of the desired biocidal effect.

"A primary composition" can a composition or product lacking microbial stability, thus lacking a biocide. Usually, one or more conventional biocides are added to such a primary composition. However, sec. and/or tert. amine(s) according to the first aspect can be used instead, thus substituting or replacing said conventional biocide(s). Examples of such primary compositions and thereto related products are given in the herein, such as in the section **Examples.**

In some embodiments, the effective amount of the biocide, e.g. N-butyldiethanolamine, is 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

In some embodiments, N-butyldiethanolamine is provided in a concentration of 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

In some embodiments, said method comprises the step of addition of one or more peroxide compound, such as hydrogen peroxide, a peroxide, and/or one or more peroxide comprising stabilized compound, including any combinations thereof.

In some embodiments, the one or more peroxide is provided in a concentration of 0.001-2.0, 0.002-1.5, 0.005-1.0, 0.01-1.0, or 0.05-0.5% per weight, or and/or at least 0.001, 0.002, 0.005, 0.01, 0.2, 0.5, 1.0, or 0.05-0.5% per weight, or more.

In some embodiments, a product according to the second aspect is provided.

In some embodiments, the primary composition is essentially sterile (e.g. < 10, < 100 CFU/VCC /ml org).

In some embodiments, the primary composition possesses 10-100, 10-1000, or more than 1000 CFU/ml or g. In some embodiments, the primary composition possesses < 10, $10\text{-}10^2$, $10^2\text{-}10^3$, $10^3\text{-}10^4$, $10^4\text{-}10^5$, or more than $10^5$ CFU /ml or g.

In some embodiments, providing microbial stability comprises a reduction in CFU/ml during storage, maintenance of sterility, and/or reduced of contamination risk upon exposure to a non-sterile environment, such as opening and closure of a container comprising paint during use.

In some embodiments, "microbially stability" is defined as:

- elimination of microbial activity (reduction in viable cell count (VCC) by at least 6, 7 or 8 log units);
- long-term provision of a microbe-free environment (< 10 or VCC/ ml or g); and/or
- resistance to postproduction contamination; and/or
- including any combination of (a), (b), and/or (c).

In a fourth aspect, the present invention concerns a method of providing a microbially stable composition, which may comprise the step of replacing one or more conventional biocide(s) with a biocide in the form of a sec. and/or tert. amine according to the first aspect, such as N-butyldiethanolamine.

The fourth aspect may also pertain to a method for substituting or replacing a conventional biocide in a composition or product, said method comprising the step of replacing said conventional biocide with a sec. and/or tert. amine according to the first aspect, such as N-butyldiethanolamine. In some embodiments, the concentration of the sec. and/or tert. amine is around the same concentration as the conventional biocide that has been replaced by N-butyldiethanolamine.

In some embodiments, the product or composition provided by a method according to the fourth aspect can be a composition or product according to the second aspect.

Generally, the sec. and/or tert. amine according to the first aspect is provided in an active amount. In some embodiments, the concentration of the biocide, such as N-butyldiethanolamine is 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

In some embodiments, said method comprises a step of a pH adjustment, such as addition of one or more acid(s), base(s) or salt(s), including any combination(s) thereof. Generally, if a more alkaline pH is needed, other amines, and even ammonia can be used. If compatible with the product, other bases can be added, such as NaOH, KOH and the like. If a more acid pH is required, other acids, including chelating acids like oxalic acid, citric acid and other organic acids can be added, which may also include acidic acid. Generally, if compatible with the product/composition, other inorganic or organic acids can be used, such as HCl, $H_2SO_4$, $H_3PO_4$ and the like. In some embodiments, the use of an appropriate acid or base may increase the biocidal effect of the sec. or tertiary alkyl alkanolamine(s), and this effect may be more than a simple pH effect. For cationic sensitive compositions, such as dispersions and the like, pH-adjustment may be performed using organic and inorganic acids and bases, where the ionic charge/ radius of the cationic part is weaker than that for $K^+$. Hereby the precipitation of dispersed micelles can be reduced or avoided.

In some embodiments, the biocide is or comprises N-butyldiethanolamine.

In some embodiments, substituting one or more conventional biocide(s) with a biocide according to the first aspect, such as NBTA may provide an improvement in rust protection, such a protection being better than when using a conventional biocide.

In a fifth aspect, the present invention relates to a composition or product provided according to any one of the preceding aspects.

In a sixth aspect, the present invention pertains to a further composition or product comprising 0.1-99.9% or 1.0-99% of a composition according to any one of the preceding aspects. In some embodiments, the product is a final product.

In a seventh aspect, the present invention concerns a receptacle comprising a composition or product according to any one of the preceding aspects.

In some embodiments, the receptacle may comprise a lid. In some embodiments, the receptacle is re-sealable. Many household products, but also products for craftsman and the like, are provided in such receptacles. Here the use of a biocide according to the present invention may not also improve shelf-life, but also prolong the usability of the product after opening. Opening a lid of a paint container and closing it again, unscrewing the lid of a tooth paste tube and putting it back on again, use of cosmeticals etc are daily life operations, were the content of said receptacles will come in contact with the microbial flora of the surroundings and induce spoilage. In such circumstances, the use of biocide according to the invention can provide increased microbial stability.

Non limiting examples concerning the use of N-BDA* as biocide in different applications according to the present invention (see e.g. **Examples 1-45**):

*It is submitted that other sec. and/or tert. amine according to the invention could be used as well. A pH adjustment step may be provided if needed, such as disclosed herein and/or customary in the various fields. Often, the different exemplifications of the use of a biocide according to the present invention for substituting or replacing a conventional biocide concern MIT, BIT or benzalkonium chloride. However, it is submitted that, *mutatis mutandis,* similar results could be obtained for other, conventional biocides, thus such examples should not be construed as being limited to only MIT, BIT and/or benzalkonium chloride.

In potable water, 0.05- 2% N-BDA could be added to reduce, remove and/or preserve the water from growth of bacteria, algae and fungi. This could be water for human or animal consumption. Here, it is desirable that the biocide has a low toxicity to humans and/or animals.

In water for use in hydraulic system based on water as hydraulic medium, an addition of 0.01- 3% of solution will reduce, remove and/or preserve water from microbial contamination. Further the hereby obtained hydraulic fluid can be optional conditioned in pH and red/ox properties by buffering the amine and adding antioxidant/reducing additives.

In technical water, such as for cleaning vehicles, e.g. in washing-automats for cars, the addition of e.g. 0.1- 5% N-BDA will reduce existing contamination with microorganisms, remove and/or reduce their growth possibilities and preserve the fluid. If e.g. used together with a soap system this may be further reused, and if added as 0.05-0.5% for the final rinse-water with a surfactant this may be recirculated through particle filters in more cycles than before. N-BDA and/or other sec. or tert. amines according to the invention maintain their biocidal effect, also when used in combination with a soap, in contrast to e.g. benzalkonium chloride.

Water for outdoor or indoor pools, jacuzzies, including water for cleaning of showers and/or changing areas in swimming- or other sport facilities may benefit from treatment with e.g. 0.1-2% N-BDA, reducing or even avoiding the use of halogenated compounds. In collection systems for rainwater, e.g. 0.1-2% N-BDA could be used to control and/or prevent unwanted growth of microorganisms like bacteria, algae and fungi, in particular pathogens.

In pastes comprising additives, such as abrasion particles, e.g. toothpaste, polishing pastes for metals, plastics or lacquer an addition of e.g. 0.1-5% N-BDA will preserve the paste and decrease microbial contamination. The presence of N-BDA may also improve the removal of biofilms and/or algae.

For detergents, including products for personal hygiene such as shower gels and shampoos but also lotions and/or moisturizers and the like, e.g. 0.05-2% N-BDA can be added for protection against growth of microorganisms.

For compounded waterborne mixtures for use e.g. in spraybottles or other receptacles such as detergents, cleaners for ovens and household, glass cleaning and the like, presence of e.g. 0.1- 2% N-BDA can protect these products from degradation by inhibiting growth of microorganisms.

Disinfectants, like Rodalon™, can be supplemented in biocidal efficiency by addition of e.g. 0.1-10% N-BDA.

Paint-formulations, lacquer, wood impregnation paints on water base either as dispersions, emulsions and/or as composite combinations can be protected against microbial growth by presence of e.g. 0.1-5% N-BDA.

Wood can in the natural form such as untreated wood can protected by spraying e.g. a 0.1-10% solution of N-BDA in water on the surface (surface impregnation).

Gels, creams and cosmetical products can be protected by e.g. 0.1-2% N-BDA.

In pharmaceutical products N-BDA is offering a new type of biocidal protection with low toxicity and ease of formulation by adding it 0.1-2% of water content.

For medical detergents and antiseptic spray purposes the N-BDA in combination with hydrogen peroxide offers fast killing of micro life and preservation in time. The recommended addition to sterile products is 0.01-2% N-BDA and 0.01-3% hydrogen peroxide.

The examples disclosed above comprise different N-BDA ranges. In some embodiments, more, such as 1.5, 2.0, or 2.5 times more N-BDA can be added. In some embodiments, 1.5, 2.0, or 2.5 times less N-BDA can be added. Common ranges N-BDA can be around 0.005-20% N-BDA, depending on the product and its composition. Generally, if another biocide is present in the composition or product, a lower concentration of N-BDA may suffice.

In some embodiments, N-BDA is added in, and/or comprises a buffer system. Thereby, variations or changes of pH are counteracted, as N-BDA may act as base.

Generally, in the Examples disclosed herein relating to N-BDA, it is submitted that one or more secondary and/or one or more tertiary amine(s) could be used as well. This may also include any combination thereof.

The Examples disclosed herein demonstrate that the biocides according to the invention, can be used in a wide range of consumer and or business-relevant applications.

In some embodiments, the biocide such as N-butyldiethanolamine can provide - alone, or in combination with hydrogen peroxide and/or peroxide stabilized compounds - short and/or long term protection of waterborne systems like dispersions, emulsions, suspensions, suspoemulsions and gels, pastes and liquids. Common concentrations may comprise 0.10% -10% biocide, and 0.005% - 5% peroxide or peroxide derivate.

Generally, the use of the biocide according to the invention, such as N-butyldiethanolamine, as e.g. antimicrobial agent, antibacterial, fungicide, algicide and the like, is not limited to compositions and/or products comprising recycled PVB (rPVB), crosslinked PVB (PVBX), otherwise modified PVB. However, in some embodiments, the biocide according to the invention, such as N-butyldiethanolamine can be limited to compositions and/or products comprising recycled PVB (rPVB), crosslinked PVB (PVBX), otherwise modified PVB. In some embodiments, the biocide according to the invention such as NBDA, and/or its use comprise products and/or composition may comprise acrylics, styrene-acrylics, vinyl-acrylics, polyalpha modified acrylics, polyolefins and modified polyolefins, polyurethanes, polyesters, polvinylidene chlorides, polyvinyl-acetates, StyreneButadieneRubber latex and Carboxylated SBR latex and binders, vehicles, filmforming aids, filmformers based on renewable and/or sustainable origins such as polysaccharides, starches & modified starches, dextrines, polyhydroxyalkanoates. Furthermore, in some embodiments the biocide according to the invention, such as NBDA can be used in cosmetical products, toothpastes, detergents, surfactants, cleaning agents, household ingredients, liquid soaps and soap bars, cutting oils, hydraulic oils, synthetic oils, engine oils, lubrication oils, heat transfer oils, drilling oils, aqueous oil emulsions, aqueous silicone-, siloxane-, polysiloxane emulsions & dispersions, tap water, drinking water, well water, or rain water.

In some embodiments, the biocide according to the invention, such as NBDA can be used in the context of provision of a film, coating and coating-related applications such as final formulations of binders, glue, precoats, topcoats, peelable coats, primers, metal primers, paints, stoving paints, coatings for printed circuit boards, and general coatings for singular applications as well as compound manufacture of films, foils, coatings, but also woven or nonwoven textiles, carpet backings, floorcovering solutions, binders for fibres, artificial grass, concrete sealers, dust binders and especially sound dampening compound coatings.

In some embodiments, the use of a biocide according to the invention, such as N-butyldiethanolamine makes it possible to attain a VOC-free biocidal protection. This can be desirable in the emerging market of recycled polymer products, allowing for sustainability labels, which are more and more important to comply with.

In some embodiments, the use of N-butyldiethanolamine and/or other biocides according to the invention allow for simultaneous benefits, such as two or more of: pH-control, stability improvement: general ease of operation in waterborne sustainable formulations, and user friendliness.

In some embodiments, the relevant decision factors concerning in use of the biocide(s) according to the invention may comprise considerations regarding one or more of: health, environment, pH, boiling point, viscosity, taste, smell, and solubility in water.

The current invention provides a straightforward approach to biocidal protection of a wide range of industrial water-based or water comprising products in all volumes, and avoiding undesired effects such as allergenic sensitization VOC's, and the like.

In some embodiments, a composition or product comprising a sec. and/or tert. amine according to the present invention may also be called "biocide-free", meaning the product being free of conventional biocides. In some embodiments, such a composition or product may comprise a sec. and/or tert. amine present in concentration and/or threshold below a given limit as per valid official regulation and/or label.

As disclosed herein, known and widely used production and/or formulation methods for compositions and/or products can be adapted to accommodate the sec. and/or tertiary amines according to the invention with biocidal effect. This is in-line with increasing legislative as well as market demands for VOC-free products, replacement of undesired biocides, and/or a general trend towards lower limits for additives, including biocide concentration(s).

As shown in the examples the present invention, especially in relation to N-butyldiethanolamine (NBDA), has been shown to have significant effect at least in relation to in-can preservation of paints, for wood preservation, and as a general agent capable of destroying, inhibiting the growth, or the reproduction, of bacteria, fungi, and virus.

It has been shown that N-butyldiethanolamine in concentrations from around 0.15% may have a significant biocidal effect as the sole biocidal active additive.

The methods in using of NBDA for waterbased dispersions, emulsions or suspensions and combination hereof, may depend on the stability considerations for the resulting complex blends. In general terms a diluted NBDA from stock 1-99.5 % NBDA is diluted either in water, or in a buffered solution, alternatively a surfactant based solution or a chosen combination of those. Also, additions of organic solvents may be successfully, alone or in combination, used for further compounding the material in production, although the considerations of the resulting VOC's or SVOC's may exclude the most obvious choices. Even fatty acid containing emulsions can be added the NBDA from either waterbased, or organic solvent solutions. The initial point of addition of the NBDA may preferably comply to normal industry hygiene procedures, mainly allowing the preservative to be added only to properly clean uncontaminated material. The intention is to minimize the biocide pressure on consumer products to the maximum, so even adding the NBDA to only previously pasteurized blends seems preferable in some cases. For working with recycled and recovered products this is a main focus.

**In-can preservation**

N-butyldiethanolamine has shown excellent results for use for in-can preservation of paints, such as acrylic paints. N-butyldiethanolamine has in fact been shown to be highly effective for preservation of paints when added as the sole additive for biocidal effect. Furthermore, paints containing N-butyldiethanolamine as the sole biocidal additive as well as N-butyldiethanolamine + Hydrogen Peroxide are shown to have no bacterial growth even for sustained periods of time.

N-butyldiethanolamine may be an effective biocide in relation to preservation, especially in-can preservation, of paints in a range of concentrations such as from 0.1% - 10% such as 0.2% - 10%, such as 0.25%-7%, such as 0.5% - 5% against aerobic bacteria such Gram-negative bacteria such as *Pseudomonas aeruginosa.* For example, N-butyldiethanolamine in concentrations of 0.5%, 1%, 2%, and 5% has been shown to be effective against aerobic bacteria such Gram-negative bacteria such as *Pseudomonas aeruginosa.* I.e. according to the present N-butyldiethanolamine may be an effective biocide in relation to preservation, especially in-can preservation, of paints in a range of concentrations from 0.5% or possibly lower such as 0.1% or 0.2% or 0.3% or 0.4% as no lower limit has been identified.

The maximum concentration of N-butyldiethanolamine in relation to preservation, especially in-can preservation, of paints in a range of concentrations may be decided by e.g. industry standards, environmental regulations etc. An upper concentration limit for NBDA may e.g. be 10% or higher or 9% or 8% or 7% or 6% or 5% or 4% or 3% or 2%.

N-butyldiethanolamine in a range of concentrations has been shown to provide a long term anti-microbial effect even at concentrations around 0.5% with a sustained effect after more than a year.

In general, the pH for in-can products in the context of the present invention and examples may be in the range of 5 - 11.

The in-can product may for example be paint, coatings, lacquers, wood impregnation products, surface repairing products, paint- and coating cleaning products before new-painting. The in-can product may be intended for Applications by brushes, spraying, dusting, rakel or spatula, dipping or impregnation by pressure/temperature phase born methods like diffusion.

The in-can product may be intended to be applied direct to metal (DTM), as wood preserving coats, peelable coatings, concrete dustbinders or other dust binding coatings, antiviral hygiene maintaining coatings, coatings and paint for paper, cardboard, interior and outdoor applications, precoats, and grounds for overpaint, gluing or assembly.

In-can products according to the present may also include materials with biologically originated binders, fillers or extenders. Functional coatings such as Antistatic coatings, electrically conducting coatings, incapsulation coating for photovoltaic, display or other electronic circuitry. Materials with mineral fillers, recycled fibers, carbonfibers, hol-lowspheres and otherwise surface active fillers. Colored paints with transparent, opaque or covering colorants/fillers. Functional paints with a specialized technological function for healthcare, agricultural, industrial, military, space and automotive applications.

Reference is made to other disclosures regarding paint, paint products and formulations hereof in the present document.

## Wood impregnation

N-butyldiethanolamine may be an effective biocide in relation to preventing wood destruction caused by fungi, in a range of concentrations such as from 0.1% - 10% NBDA such as 0.2% - 10%, such as 0.25%-7%, such as 0.3% - 5%, such as 0.3% - 2%. For example, N-butyldiethanolamine in concentrations of 0.36%, 0.51%, 0.72%, 1.01% and 1.43% has been shown to be effective as a fungicide for preventing wood destruction caused by *Poria placenta* and/or *Gloeophyllum trabeum.*

I.e. according to the present N-butyldiethanolamine may be an effective biocide in preventing wood destruction caused by fungi in a range of concentrations from 0.36% or possibly lower such as 0.3% or 0.2% or 0.1%.

The maximum concentration of N-butyldiethanolamine in relation to preventing wood destruction caused by fungi may in some embodiments be decided by e.g. industry standards, environmental regulations etc. An upper concentration limit may e.g. be 10% or 9% or 8% or 7% or 6% or higher.

## Biocide as a general antimicrobial agent in aqueous solutions

N-butyldiethanolamine has been shown to exhibit a broad spectrum of antimicrobial activity. Test has shown N-butyldiethanolamine to be active against Gram negative, Gram positive bacteria, yeasts and mould, known as most common food spoilage and pathogenic organisms, as well as organisms causing spoilage in pharmaceutical industry and cosmetics.

N-butyldiethanolamine may be an effective biocide in relation to killing bacteria, yeasts and mould in a range of concentrations such as at least 0.1%, such as at least 0.15%, such as at least 0.16%, such as at least 0.2%, such as from 0.1% - 10%, such as 0.15% - 10%, such as 1.5% - 7% such as 0.2% - 10%, such as 0.25% -7%, such as 0.3% - 5%, such as 0.3% - 2%, such as 0.16% - 5%.

Specific examples as shown that NBDA has a Minimum inhibitory concentration in relation to some bacteria including for example *Lactobacillus brevis,* of 0.16%.

It has been shown that N-butyldiethanolamine virus in concentrations from 1% - 5% and possibly lower as a sole ingredient may destroy vira. For example, 54% of Murine Norovirus is destroyed after 60 seconds.

The maximum concentration of N-butyldiethanolamine in relation to act as an effective biocide in relation to killing bacteria, yeasts and mould may be decided by e.g. industry standards, environmental regulations etc. An upper concentration limit may e.g. be 10% or 9% or 8% or 7% or 6% or 5% or 4% or 3% or 2.5% or 2%.

Since the NBDA mainly is distributed through the water phase and is intended to protect this, a direct blended solution in pure distilled water is preferred, but the methods in using of NBDA for waterbased dispersions, emulsions or suspensions and combination hereof, may for example depend on the stability considerations for the resulting complex blends. In general terms a diluted NBDA from stock is 1-99.5 % NBDA diluted either in water, or in a buffered solution, alternatively a surfactant-based solution or a chosen combination of those. Also, additions of organic solvents may successfully, alone or in combination, be used for further compounding the material in production, although the considerations of the resulting VOC's or SVOC's may exclude the most obvious choices. Even fatty acid containing emulsions can be added the NBDA from either waterbased, or organic solvent solutions. The initial point of addition of the NBDA must preferably comply to normal industry hygiene procedures, mainly allowing the preservative to be added only to properly clean uncontaminated material. The intention is to minimize the biocide pressure on consumer products to the maximum, so even adding the NBDA to only previously pasteurized blends and formulations seems preferable.

Further embodiments of the invention are also disclosed in sections "Numbered Embodiments", as well as" Examples".

**Numbered Embodiments**

1. Use of a secondary or tertiary amine with formula N $R^1$ $R^2$ $R^3$ as biocide, wherein

- $R^1$ is an unbranched or branched alkyl group with 1-6 C atoms, such as methyl, ethyl, propyl, butyl, pentyl, or hexyl, including any isomer thereof;
- $R^2$ is H; an unbranched or branched alkyl group with 1-6 C atoms, such as ethyl, propyl, butyl, pentyl, or hexyl, including any isomer thereof; or an unbranched or branched alcohol group with 1-5 C atoms, such as methanol, ethanol, propanol, butanol, and pentanol, including any isomer thereof; and
- $R^3$ is an unbranched or branched alcohol group with 1-5 C atoms, such as methanol, ethanol, propanol, butanol, and pentanol, including any isomer thereof.

2. Use according to embodiment 1, wherein the total number of C atoms ($R^1$ + $R^2$ + $R^3$) is 2-17, 6-14, 7-12, 8-10, 8, 9, or 10.

3. Use according to embodiment 1 or 2, wherein the amine is a tertiary amine, and $R^1$ is an unbranched or branched alkyl group with 1-6 C atoms; $R^2$ an unbranched or branched alkyl group with 2-6 C atoms; or an unbranched or branched alcohol group with 1-5 C atoms; and $R^3$ is an unbranched or branched alcohol group with 1-5 C atoms.

4. Use according to any one of the preceding embodiments, wherein the tertiary amine is a dialkyl monoalkanolamine or a monoalkyl dialkanolamine.

5. Use according to any one of the preceding embodiments, wherein the tertiary amine is a dialkyl monoalkanolamine and/or $R^1$ has 2-6 or 3-5 C atoms, $R^2$ has 3-6 C atoms, and/or $R^3$ has 1-4 C atoms, including any combination(s) thereof.

6. Use according to any one of the preceding embodiments, wherein $R^1$ has 3-6 C atoms, $R^2$ has 1-3 C atoms, and/or $R^3$ has 1-3 C atoms, including any combination(s) thereof.

7. Use according to any one of the preceding embodiments, wherein $R^1$ has 4 C atoms, $R^2$ has 2-4 C atoms, and/or $R^3$ has 2 C atoms, including any combination(s) thereof.

8. Use according to any one of the preceding embodiments, wherein $R^1$ is n-butyl, sec-butyl, isobutyl, or tert-butyl; $R^2$ is methanol, ethanol (prim or sec); and/or $R^3$ is methanol, ethanol (prim or sec), including any combination(s) thereof.

9. Use according to any one of the preceding embodiments, wherein $R^1$ is n-butyl, sec-butyl, isobutyl, or tert-butyl, $R^2$ is ethanol (prim or sec), and $R^3$ is ethanol (prim or sec).

10. Use according to any one of the preceding embodiments, wherein the tertiary amine is N-methyl diethanolamine (CAS 105-59-9), N-ethyl diethanolamine (CAS 139-87-7), N-propyl diethanolamine (CAS 6735-35-9), N-butyldiethanolamine (CAS 102-79-4), N-t-butyl diethanolamine (CAS 2160-93-2).

11. Use according to any one of the preceding embodiments, wherein the tertiary amine is dimethylethanolamine (CAS 108-01-0), diethylethanolamine (CAS 100-37-8), dipropylaminoethanol (CAS 3238-75-3), diisopropylethanolamine (CAS 96-80-0), or dibutylethanolamine (CAS 102-81-8).

12. Use according to any one of the preceding embodiments, wherein the tertiary amine is N-butyldiethanolamine (CAS 102-79-4).

13. Use according to embodiment 1 or 2, wherein the amine is a secondary amine, and $R^1$ is an unbranched or branched alkyl group with 1-6, 2-5, or 3-4 C atoms; $R^2$ is H; and $R^3$ is an unbranched or branched alcohol group with 1-5, or 2-4 C atoms.

14. Use according to any one of embodiments embodiment 1, 2, or 13, wherein the secondary amine is (i) methyl monoalkanolamine, such as methyl monomethanolamine, methyl monoethanolamine, methyl monopropanolamine, methyl monobutanolamine, or methyl pentanolamine; (ii) ethyl monoalkanolamine, such as ethyl monomethanolamine, ethyl monoethanolamine, ethyl monopropanolamine, ethyl monobutanolamine, or ethyl pentanolamine; (iii) propyl monoalkanolamine, such as propyl monomethanolamine, propyl monoethanolamine, propyl monopropanolamine, propyl monobutanolamine, or propyl pentanolamine; (iv) butyl mono-alkanolamine, such as butyl monomethanolamine, butyl monoethanolamine, butyl monopropanolamine, butyl monobutanolamine, or butyl pentanolamine; or (v) pentyl monoalkanolamine, such as pentyl monomethanolamine, pentyl monoethanolamine, pentyl monopropanolamine, pentyl monobutanolamine, or pentyl pentanolamine.

15. Use according to any one of the preceding embodiments, wherein the biocidal effect is provided by one or more amine(s) according to the any one of the preceding embodiments.

16. Use according to any one of the preceding embodiments, wherein the biocidal effect is provided by a combination comprising or consisting of one or more secondary amine(s), one or more tertiary amine(s); or a combination of one or more secondary amine(s) and one or more tertiary amine(s); and optionally, wherein said secondary and/or tertiary amine(s) being as disclosed in any one of the preceding embodiments.

17. Use according to embodiment 15 or 16, wherein the one or more tertiary amine(s) is/are selected from a tertiary amine according to one of the preceding embodiments, wherein the biocidal effect is provided by: one or more dialkyl monoalkanolamines; two monoalkyl dialkanolamines; one or more dialkyl mono-alkanolamine and one or more monoalkyl dialkanolamine; one or more dialkyl monoalkanolamine and one or more alkyl monoalkanolamine; or one or more monoalkyl dialkanolamine and one or more alkyl monoalkanolamine.

18. Use according to any one of the preceding embodiments, wherein the biocide is an antimicrobial agent.

19. Use according to any one of the preceding embodiments, wherein the antimicrobial agent is one or more of: bactericide, fungicide, sporicide, algaecide, antiviral, microbially stabilizing agent, including any combination thereof.

20. Use according to any one of the preceding embodiments, wherein the secondary and/or tertiary amine provides one or more of: short-term elimination of microbial activity (reduction in viable cell count (VCC) by at least 2, 3, 4 or more log units), long-term provision of an essentially microbe-free environment (< 10, 100 VCC/ml (or g), and resistance to postproduction contamination including any combination thereof.

21. Use according to any one of the preceding embodiments, wherein the biocide is used in one or more of: a personal care product, home care product, cosmetical, paint, glue, coating, solvent, spray, dispersion, emulsion, suspension, suspoemulsion, soap, detergent, household or industrial cleaning agent, paste, gel, lubricant, cooling fluid, contact-cooling system, aqueous system, glue, precoat, topcoat, peelable coat, primer, metal primer, paint, stoving paint, coating for printed circuit boards, coating for singular application as well as compound manufacture of film, foil, woven or nonwoven textile, carpet backing, flooring solution, binder for fibres, artificial grass, concrete sealer, dust binder, sound dampening compound coating for use in architectural or in situ mechanical systems, feed product, food product, pesticide, medicament, or pharmaceutical.

22. Use according to any one of the preceding embodiments, wherein the biocide and/or its use can be classified as any one of Main Group 1-4 according to Biocidal Product Regulation (EU) 28/2012.

23. Use according to any one of the preceding embodiments, wherein the biocide and/or its use can be classified as any one of Product Type 1-22 according to Biocidal Product Regulation (EU) 28/2012.

24. Use according to any one of the preceding embodiments, wherein the biocide is used in an aqueous system.

25. Use according to embodiment 24, wherein the aqueous system is selected from the group consisting of: liquid, dispersion, emulsions, suspension, suspoemulsions, paste, gel, lubricant, cooling fluid, heat exchange fluid, and contact-cooling systems, including any combination(s) thereof.

26. Use according to embodiment 24 or 25, wherein the aqueous system comprises a binder.

27. Use according to embodiment 26, wherein the binder comprises or consists essentially of a biological degradable polymer.

28. Use according to embodiment 26 or 27, wherein the binder comprises, consists essentially, or consists of polyvinyl butyral (PVB), recycled PVB (rPVB), modified PVB (mPVB), and/or crosslinked PVB (PVBX), including any combination thereof.

29. Use according to any one of the preceding embodiments, wherein a biocidal effect is provided without the need for one or more further biocide(s).

30. Use according to embodiment 29, wherein said further biocide is a conventional biocide, such as a biocide selected from the group consisting of: (i) isothiazolines, in particular methylisothiazolinone (MIT), benzisothiazolinone (BIT), methylchloroisothiazolinone (MCI), chloromethyl-methylisothiazolone (CMIT), and/or octhilinone (OIT); (ii) halogens and/or halogen-comprising compounds and/or compositions, in particular compositions or compounds comprising Cl, Br, and/or J; (iii) heavy metals including salts, in particular Ag, Zn, Zr, Cu, Sn, including inorganic and organic compounds, such as colloidal silver, silver nitrate, mercury chloride, phenyl mercury salts, copper sulphate, copper oxide-chloride; (iv) phenolic biocides, e.g. phenol(s), cresol(s), xylenol(s), tri- and tetra-methylphenol(s), propyl/butyl phenol(s), methyl resorcinol(s), naphthols, neutral hydrocarbon tar oils, bis-phenols, chlorophenols, trichlorophenol(s), pentachlorophenol, triclosan 2-phenylphenol; and/or (v) other compounds, such as formaldehyde.

31. Use according to any one of the preceding embodiments, wherein the secondary or tertiary amine is provided in a concentration of 0.01-10.0, 0.1-5.0, 0.2-2.0, 0.4-1.5, or 0.5-1.0% by weight, and/or at least 0.01, 0.02, 0.05, 0.1, 0.2, 0.5, 1.0, 2.0, 5.0% by weight, or more.

32. Use according to any one of the preceding embodiments, further comprising the use of one or more peroxide, such as hydrogen peroxide, a peroxide and/or one or more peroxide comprising stabilized compound, including any combinations thereof.

33. Use according to embodiment 32, wherein the one or more peroxide is provided in a concentration of 0.001-2.0, 0.002-1.5, 0.005-1.0, 0.01-1.0, or 0.05-0.5% by weight, and/or at least 0.001, 0.002, 0.005, 0.01, 0.2, 0.5, 1.0, or 0.05-0.5% per weight, or more.

34. Use according to any one of the preceding embodiments, wherein one or more conventional biocide(s) is substituted at least in part by the secondary and/or tertiary amine.

35. Use according to embodiment 34, wherein at least 25% or more, such as 50% or more, such as 60% or more, 70% or more, 80% or more, 90% or more, 95% or more, 98% or more, or 100% of a conventional biocide is substituted by the secondary or tertiary amine.

36. A microbially stable composition or product comprising a secondary and/or tertiary amine according to any one of the preceding embodiments, such as N-butyldiethanolamine.

37. Composition according to embodiment 36, wherein "microbially stable composition" is defined as: a composition, wherein: a microbial activity has been eliminated (such as a reduction in viable cell count (VCC) by at least 3, 4, 5 or 6 log units), long-term provision of a microbe-free environment (e.g. < 10 VCC ml or g), and resistance to postproduction contamination, including any combination thereof.

38. Composition according to embodiment 36 or 37, wherein said composition is an aqueous composition.

39. Composition according to any one of embodiments 36-38, wherein said composition is a liquid, dispersion, emulsions, suspension, suspoemusions, paste, gel, lubricant, and contact-cooling systems, including any combination(s) thereof.

40. Composition according to any one of embodiments 36-39, wherein said composition comprises a binder.

41. Composition according to embodiments 40, wherein the binder comprises, consists essentially, or consists of a biological degradable polymer.

42. Composition according to embodiment 40 or 41, wherein the binder said composition comprises, consists essentially of, or consists of polyvinyl butyral (PVB), recycled PVB (rPVB), modified PVB (mPVB), and crosslinked PVB (PVBX).

43. Composition according to any one of embodiments 36-42, wherein the microbial stability is provided by the secondary and/or the tertiary amine, or a combination of the secondary and/or tertiary amine and a peroxide, such as hydrogen peroxide.

44. Composition according to any one of embodiments 36-43, wherein the microbial stability is provided without the need of a further biocide.

45. Composition according to any one of embodiments 36-44, wherein said composition does not comprise one or more conventional biocide(s).

46. Composition according to any one of embodiments 36-45, further comprising one or more peroxide compound, such as hydrogen peroxide, a peroxide, and/or one or more peroxide comprising stabilized compound, including any combinations thereof.

47. Composition according to any one of embodiments 36-46, wherein the secondary and/or tertiary amine is provided in a concentration of 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

48. Composition according to embodiments 36 or 47, wherein the one or more peroxide is provided in a concentration of 0.001-2.0, 0.002-1.5, 0.005-1.0, 0.01-1.0, or 0.05-0.5% per weight, and/or at least 0.001, 0.002, 0.005, 0.01, 0.2, 0.5, 1.0, or 0.05-0.5% per weight, or more.

49. Composition according to any one of embodiments 36-48, wherein said composition does not comprise one or more organic compound(s) having an initial boiling point of 250°C or below measured at a standard atmospheric pressure of 101.3 kPa.

50. Composition according to any one of embodiments 36-49, wherein said composition meets or exceeds one or more requirement(s) for AgBB, Ecolabel, The Swann label, Blue Angel label and/or Greenguard Standard(s); and/or any one of: https://www.eco-institut.de/en/portfolio/agbb-schema/, http://ec.europa.eu/ecat/,https://www.ecolabel.dk/da, https://www.blauer-engel.de/en, http://www.ecolabelindex.com/ecolabel/greenguard.

51. Composition according to any one of embodiments 36-50, wherein said composition is a cosmetical, paint, glue, coating, solvent, spray, dispersion, emulsions, suspensions, suspoemulsions, pastes and gels, lubricant and contact-cooling systems, glue, precoats, topcoats, peelable coats, primers, metal primers, paints, stoving paints, coatings for printed circuit boards, and general coatings for singular applications as well as compound manufacture of films, foils, coatings, woven or nonwoven textiles, carpet backings, flooring solutions, binders for fibres, artificial grass, concrete sealers, dust binders and especially sound dampening compound coatings for use in architectural or in situ mechanical systems.

52. Composition according to any one of embodiments 36-51, wherein said composition is a dispersion comprising polyvinylbutural (PVB), such as one or more of rPVB, mPVB, and/or PVBX, wherein microbial stability is provided one or more secondary and/or tertiary amine(s), and/or a combination of one or more secondary and/or tertiary amine(s) and a peroxide, such as hydrogen peroxide and/or one or more peroxide stabilized compound (s).

53. Composition according to embodiments 52, comprising

a. 1-70, 2-60, or 5- 55% polymer (PVB);
b. 0.2-40, 0.5- 30, or 1-20% emulsifier selected from fatty acid soaps, unsaturated C3-C22 carboxylic acid(s), and saturated C3- C22 carboxylic acid(s); and optionally,

wherein the emulsifier is selected from one or more of: oleate, such as potassiumoleate, ammoniumoleate, and sodiumoleate, and/or ricinoleate.

54. Composition according to embodiments 53, wherein microbial stability is provided by N-butyl diethanolamine.

55. A method for providing microbial stability to a composition, comprising the step of adding a secondary or tertiary amine, such as N-butyldiethanolamine to a primary composition in an effective amount.

56. Method according to embodiment 55, wherein the sec. or tert. amine is provided in a concentration of 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

57. Method according to embodiment 55 or 56, further comprising the step of addition of one or more peroxide compound, such as hydrogen peroxide, a peroxide, and/or one or more peroxide comprising stabilized compound, including any combinations thereof.

58. Method according to embodiment 57, wherein the one or more peroxide is provided in a concentration of 0.001-2.0, 0.002-1.5, 0.005-1.0, 0.01-1.0, or 0.05-0.5% per weight, or and/or at least 0.001, 0.002, 0.005, 0.01, 0.2, 0.5, 1.0, or 0.05-0.5% per weight, or more.

59. Method according to any one of embodiments 55-58, whereby a product according to any one of embodiments 36-45 is provided.

60. Method according to any one of embodiments 55-59, wherein the primary composition is essentially sterile (e.g. less than 10 or 100 CFU/ml or g).

61. Method according to any one of embodiments 55-60, wherein the primary composition possesses < 10, $10\text{-}10^2$, $10^2\text{-}10^3$, $10^3\text{-}10^4$, $10^4\text{-}10^5$, or more than $10^5$ CFU CFU/ml or g.

62. Method according to any one of embodiments 55-61, wherein providing microbial stability comprises a reduction in CFU/ml during storage, maintenance of sterility, and/or reduced of contamination risk upon exposure to a non-sterile environment, such as opening and closure of a container comprising paint during use.

63. Method according to any one of embodiments 55-62, wherein "microbially stability" is defined as:

a. elimination of microbial activity (reduction in viable cell count (VCC) by at least 6, 7 or 8 log units);
b. long-term provision of a microbe-free environment (< 10 VCC ml or g); and/or
c. resistance to postproduction contamination;

including any combination of (a), (b), and/or (c).

64. Method of providing a microbially stable composition comprising the step of replacing one or more conventional biocide(s) with one or more amines according to any one of embodiments 1-35, such as N-butyldiethanolamine, in an active amount.

65. A method for substituting or replacing a conventional biocide in a composition or product, said method comprising the step of:

- replacing said conventional biocide with a sec. or tert. amine according to any one of of embodiments 1-35 in an active amount.

66. Method according to embodiment 64 or 65, wherein the concentration of the amine(s) is around the same concentration as the conventional biocide that has been replaced by the tertiary amine.

67. Method according to any one of embodiment 64 or 66, wherein the concentration of the amine(s) is 0.01-10.0, 0.1-5.0, 0.2-2.0, 0.4-1.5, or 0.5-1.0% per weight, and/or at least 0.01, 0.02, 0.05, 0.1, 0.2, 0.5, 1.0, 2.0, 5.0% by weight, or more.

68. Method according to any one of embodiments 64-67, further comprising a pH adjustment step, such as addition of one or more acid(s), base(s), or salt(s), including any combination(s) thereof.

69. Method according to embodiment 68, wherein said acid, base, and/or salt is an inorganic or organic compound.

70. Method according to any one of embodiments 64-69, wherein the biocide is or comprises N-butyldiethanolamine.

71. Method according to any one of embodiments 64-70, wherein the composition or product is a personal care product, home care product, cosmetical, paint, glue, coating, solvent, spray, dispersion, emulsion, suspension, suspoemulsion, soap, detergent, household or industrial cleaning agent, paste, gel, lubricant, cooling fluid, heat exchange fluid, contact-cooling system, aqueous system, glue, precoat, topcoat, peelable coat, primer, metal primer, paint, stoving paint, coating for printed circuit boards, coating for singular application as well as compound manufacture of film, foil, woven or nonwoven textile, carpet backing, flooring solution, binder for fibres, artificial grass, concrete sealer, dust binder, sound dampening compound coating for use in architectural or in situ mechanical systems, feed product, food product, pesticide, medicament, or pharmaceutical.

72. A composition or product provided by a method according to any one of the preceding embodiments.

73. Composition or product according to embodiments 72, wherein said composition or product meets or exceeds one or more requirement(s) for AgBB, Ecolabel, The Swann label, Blue Angel label and/or Greenguard Standard(s) and/or any one of: https://www.eco-institut.de/en/portfolio/agbb-schema/, http://ec.europa.eu/ecat/, https://www.ecolabel.dk/da, https://www.blauer-engel.de/en, http://www.eco-labelindex.com/ecolabel/greenguard.

74. Composition or product according to embodiments 72 or 73, wherein said composition or product does not comprise one or more organic compound(s) having an initial boiling point of 250°C or below measured at a standard atmospheric pressure of 101.3 kPa.

75. A further composition, such as a final product, comprising 0.1-99.0%, or 1.0-99% of a composition according to any one of the preceding embodiments.

76. A receptacle comprising a composition or product according to any one of the preceding embodiments.

77. Receptacle according to embodiment 76, wherein said receptacle comprises a lid, and optionally, wherein said receptacle is re-sealable.

**Examples**

Hereinafter, the present invention is described in more detail and specifically with reference to the Examples, which however are not intended to limit the present invention. The examples comprise NBDA as biocide, also called "additive" in this section. However, it is submitted that similar results can be provided using other sec. and/or tert. amines according to the present invention instead of NBDA, and similar results can be achieved. Generally, further test can be performed using the directions given in e.g. Examples herein, in particular **Examples 3-6.**

**Example 1 - PVB dispersions**

A PVB dispersion is provided comprising recycled PVB foil from automotive scrap, laminated safety glass, acoustic, architectural and bullet proof architectural glass.

The typical PVB-dispersion made from recycled PVB has the following composition:

| Components: | CAS no. | Min % | Max % |
|---|---|---|---|
| Polyvinylbutyral | 63148-65-2 | 36 | 44 |
| Triethyleneglycol bis (2-ethylhexanoate) | 94-28-0 | 2 | 15 |
| Water | 7732-18-5 | 50 | 55 |
| BIT(benzisothiazolinone) | 2634-33-5 | 0.00025 | 0.0025 |
| MIT(methylisothiazolinone) | 2682-20-4 | 0.00025 | 0.0025 |
| *Min and max % are weight percent* | | | |

Hereto, a dispersion is prepared from recycled polyvinylbutyral by mixing the raw recovered polymer in water, surfactants and soap until the polymer has formed microparticles stabilised and kept in suspension by the surface-active molecules forming an electrically stabilized micelle. Hereafter the dispersion can be diluted with water, filtered and addition compounds such as biocides can be added. The dispersion made in such a way will have a nominal solids content of around 46-48%, and a pH of 9.5-11.

Generally, such suspension can be sensitive to presence of cationic ions from salts, in particular strong cationic ions. It is believed that the ionic field strength around the dissolved species and/or compound(s) dissolved is critical for the dispersion stability, with a practical limit allowing ions weaker than $K^+$. Hereby as example benzalkonium chloride will destabilise the dispersion formed due to the field strength of the dissociated ions.

A dispersion, such as the one presented above, can be prepared through normal proprietary factory routines and would formerly have been be preserved by conventional biocides, such as isothiazolinones, e.g. BIT and/or MIT. The developments in environmental consciousness and legislation for consumer protection however have set limits for applicable concentrations that do not allow for either contamination to happen when seals or lids are broken or opened in use on consumer side, or allow long term storage in stocks, in stores or warehouses.

For the experiment disclosed herein, a PVB dispersion with a significant level of contamination was chosen and analysed for microbial activity, pH, and microbial contamination using intercellular Adenosine Triphosphate cATP as a measure of microbial contamination using LuminUltra® microbial monitoring system (see e.g. **Examples 5** and **6**).

The results are summarized in the following tables, where "additive" refers to NBDA.

*Table I: PVB dispersion treated with NBDA*

| Incubation at 25°C | | | | | | |
|---|---|---|---|---|---|---|
| **NBDA no peroxide** | 0.50% | pH | BSI | 1.00% | pH | BSI |
| PVB dispersion (batch nr) | 16293 | | | 16293 | | |
| start pH dispersion (before adding additive) | | 9.48 | | | 9.48 | |
| bacteria count (fresh - before adding additive) : 11/03/2020 | 9130 | | | 9130 | | |
| bacteria count (after 1 day) - after adding additive : 12/03/2020 | 2930 | 9.77 | 4 | 1530 | 10.2 | 6 |
| bacteria count (after 1 week) : 18/03/2020 | 147 | 9.65 | 17 | 183 | 9.89 | 24 |
| bacteria count (after 1 month): 10/04/2020 | 34.8 | 9.73 | 13 | 39.1 | 9.86 | 10 |
| bacteria count (after 3 months) : 10/06/2020 | 22.7 | 9. 62 | 67 | 3.77 | 9.93 | 60 |
| bacteria count (after 6 months) : 11/09/2020 | 5.77 | 9.58 | 50 | 1.36 | 9.67 | 83 |
| | | | | | | |
| **NBDA + 0.5% peroxide (5% solution)** | 0.50% | pH | BSI | 1.00% | pH | BSI |
| PVB dispersion (batch nr) | 16293 | | | 16293 | | |
| start pH dispersion (before adding additive) | | 9.48 | | | 9.48 | |
| bacteria count (fresh - before adding additive) : 11/03/2020 | 9130 | | | 9130 | | |
| bacteria count (after 1 day) - after adding additive : 12/03/2020 | 79 | 9.99 | 57 | 61 | 10.1 | 71 |
| bacteria count (after 1 week) : 18/03/2020 | 9.9 | 9.8 | 58 | 6.31 | 9.98 | 53 |
| bacteria count (after 1 month): 10/04/2020 | 11.6 | 9.72 | 15 | 5.28 | 9.86 | 44 |
| bacteria count (after 3 months) : 10/06/2020 | 1.1 | 9.8 | 90 | 11.3 | 9.88 | 31 |
| bacteria count (after 6 months) : 11/09/2020 | 60.8 | 9.6 | 9 | 9.5 | 9.61 | 59 |

*Table II: PVB dispersion treated with NBDA*

| Incubation at 32°C | | | | |
|---|---|---|---|---|
| **NBDA no peroxide** | 0.50% | | 1.00% | |
| PVB dispersion (batch nr) | 16293 | | 16293 | |
| start pH dispersion (before additive addition) | 9.48 | | 9.48 | |
| mass product (in gram) | | | | |
| end pH dispersion | | | | |
| bacteria count (fresh - before adding additive) : 11/03/2020 | 9130 | | 9130 | |
| bacteria count (after 1 day) - after adding additive: 12/03/2020 | 215 | | 338 | |
| bacteria count (after 1 week) : 18/03/2020 | 81 | | 13.5 | |
| bacteria count (after 1 month): 10/04/2020 | 9.47 | | 17.9 | |
| bacteria count (after 3 months) : 10/06/2020 | 5.66 | | 0.94 | |
| **NBDA+ 0.5% peroxide (5% solution)** | 0.50% | BSI | 1.00% | BSI |
| PVB dispersion (batch nr) | 16293 | | 16293 | |
| bacteria count (fresh - before adding additive) : 11/03/2020 | 9130 | | 9130 | |
| bacteria count (after 1 day) - after adding additive : 12/03/2020 | 42 | | 58 | |
| bacteria count (after 1 week) : 18/03/2020 | 11.6 | | 0.9 | |

(continued)

| NBDA+ 0.5% peroxide (5% solution) | 0.50% | BSI | 1.00% | BSI |
|---|---|---|---|---|
| bacteria count (after 1 month): 10/04/2020 | 9.52 | | 13.7 | |
| bacteria count (after 3 months) : 10/06/2020 | 15.1 | | 0.94 | |
| bacteria count (after 6 months) : 11/09/2020 | 5.72 | 55 | 4.59 | 50 |

Table III: PVB Dispersion treated with NBDA

| Incubation at 60°C | | |
|---|---|---|
| **NBDA no peroxide** | 0.50% | 1.00% |
| PVB dispersion (batch nr) | 16293 | 16293 |
| start pH dispersion (before adding additive) | 9.48 | 9.48 |
| bacteria count (fresh - before adding additive) : 11/03/2020 | 9130 | 9130 |
| bacteria count (after 1 day) - after adding additive : 12/03/2020 | 420 | 244 |
| bacteria count (after 1 week) : 18/03/2020 | 276 | 387 |
| bacteria count (after 1 month): 10/04/2020 | 126 | 202 |
| bacteria count (after 3 months) : 10/06/2020 | 4.2 | 9.3 |
| bacteria count (after 6 months) : | | |
| | | |
| **NBDA + 0.5% peroxide (5% solution)** | 0.50% | 1.00% |
| PVB dispersion (batch nr) | 16293 | 16293 |
| bacteria count (fresh - before adding additive) : 11/03/2020 | 9130 | 9130 |
| bacteria count (after 1 day) - after adding additive : 12/03/2020 | 226 | 265 |
| bacteria count (after 1 week) : 18/03/2020 | 147 | 203 |
| bacteria count (after 1 month): 10/04/2020 | 54 | 61 |
| bacteria count (after 3 months) : 10/06/2020 | 48.6 | 5.2 |

**Example 2 - Treatment of water**

Table IV: Tap water and polluted water treated with NDBA

| Incubation at 32°C | | |
|---|---|---|
| 300 grams water | cATP | BSI |
| Tapwater | 11, 2 | 42 |
| Tapwater + 0.5% NDBA | 7.35 | 56 |
| | | |
| 300 grams water | cATP | BSI |
| Polluted water | 815 | 51 |
| Polluted water + 0.5% NDBA | 56.2 | 48 |

**Example 3 - Substitution of conventional biocides with NBDA or other sec. or tert. amine according to the present invention**

Biocidal efficiency to demonstrate the efficiency of a biocide such as NBDA or another sec. or tert. amine according to the present invention, and its suitability for replacing/substituting one or more conventional biocide(s) can be performed as follows, by e.g. providing:

A test sample (T): In a known recipe for a product comprising one or more conventional biocide(s), said biocide(s) is replaced with NBDA (or another sec. or tert. amine according to the present invention).
A control sample (C): Product comprising one or more conventional biocide(s) produced following an established recipe.
A negative control sample (N): A further negative control may be provided by removing said conventional biocide(s) from the recipe, without addition of NBDA (or other biocides). Provision and test of the N-sample can be optional.

Ideally, the T, C and N-samples are provided and stored using methods, protocols, raw materials, conditions and the like, which are very close, and ideally identical, *mutatis mutandis.* In particular, the samples should be subjected to similar or identical microbial contamination during their provision, and or storage if possible.
If needed, a pH adjustment can be performed, such as disclosed in **Example 4.**

**Example 4 - pH adjustment**

It can be desirable to adjust the pH of a sample upon addition of NDBA, and/or another sec. or tertiary alkyl alkanolamine-based biocide.
Sec. or tertiary alkyl alkanolamine(s), such as NDBA possess amphoteric properties, i.e. being capable of both accepting protons (alkaline action) and releasing a protons (acid reaction). In weak alkaline environments, they possess buffering properties in relation to their concentration. If a more alkaline pH is needed, other amines, and even ammonia can be used. If compatible with the product, other bases can be added, such as NaOH, KOH and the like.
If a more acid pH is required, other acids, including chelating acids like oxalic acid, citric acid and other organic acids can be added, which may also include acidic acid. Generally, if compatible with the product/composition, other inorganic or organic acids can be used, such as HCl, $H_2SO_4$, $H_3PO_4$ and the like.
The use of an appropriate acid or base may increase the biocidal effect of the sec. or tertiary alkyl alkanolamine(s), and this effect may be more than a simple pH effect.

**Example 5 - microbial stress test**

Samples, such as test-, control- and/or negative control samples are provided according to **Example 3.** To assess the effect of the biocide(s), microbial contamination is measured, such as according to **Example 6,** or other conventional methods known in the art.
In short, samples are exposed to microbial contamination (microbial stress test) e.g. by opening a lid and closing it for a defined period of time, or other operations, mimicking a conventional user situation. Alternatively, samples can be inoculated with defined quantities of microorganisms, such as one or more indicator microorganism.
The samples can be divided into different aliquots, and incubated for selected periods at one or more relevant temperatures, such as e.g. one or more of 4°C, room temperature (RT, usually 20°C, 22°C, or 25°C), 30°C, 32°C, 37°C, 40°C, and/or 60°C), simulating e.g. appropriate storage, processing and usage conditions.
Microbial contamination of control, test and/or negative control samples can be determined according to **Example 6.**

**Example 6 - Assessment of microbial contamination**

A suitable sample size is assessed for microbial contamination using methods known in the art, which may comprise dilution of the sample in necessary.

a) Method A - ATP test.

ATP, such as intracellular ATP is measured using a commercially available system, such as provided by LumiUltra®, in particular a method using luminase (Aqua Tools, see details below).
Cellular ATP (cATP) represents the amount of ATP contained within the living cells, and is the direct indicator of the total living biomass:

$$cATP = tATP - dATP \ (pg/ml) \ (tATP = total \ ATP, \ dATP = t\text{-}ATP\text{-} \ cATP$$

The Biomass Stress Index (BSI) can be calculated as: BSI=dATP/tATP

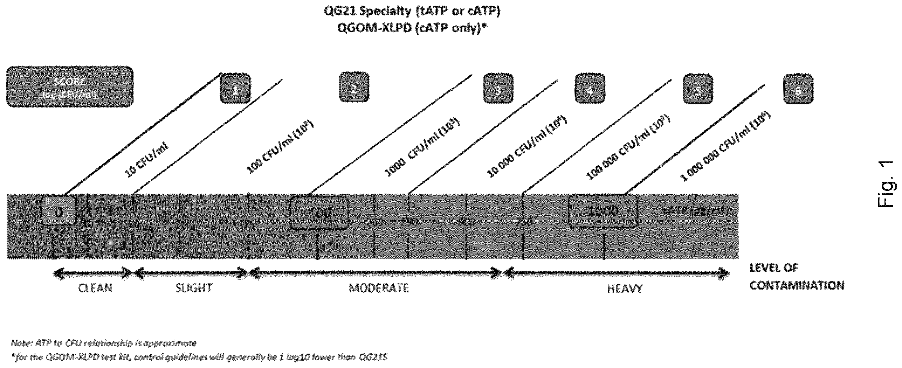

The ATP values can be correlated to CFU according to **Figure 1.**

| | |
|---|---|
| cATP $\leq$ 30 pg/ml: | $\leq$ 10 cfu |
| cATP 30-75 pg/ml: | ~100 cfu |
| cATP 100-250 pg/ml: | ~1000 cfu |
| cATP 250-750 pg/ml: | ~10000 cfu |
| cATP 750-1000 pg/ml: | ~100000 cfu |
| cATP > 1000 pg/ml: | $\geq$ 100000 cfu |

The interpretation for preventive or preserving actions for the biocide used follows:

cATP < 100 (pg/ml) indicates good control "green". This can be split into "clean" (cATP < 30 pg/ml) and "slight" (cATP =30-75 pg/ml).
100<cATP<1000 (pg/ml) needs preventive action and is "orange".
cATP>1000 (pg/ml) needs a corrective action, and is "red".

In short, a buffering solution and Luminase enzyme are mixed. After daily ATP standard calibration, an aliquot, such as 1 ml of sample is transferred to an 1 ml extraction tube. After dilution in UltraLute resin, the total ATP (content can be established in the luminescence measuring device. 2) 1 ml sample is dissolved in LumiSolve stabilizing agent. Here from a 100-microliter sample is added 100 microliter Luminase enzyme, and a measurement immediately after shows the dissolved ATP. For further details, see e.g. Aqua Tools (78300 Poissy, France) Quick reference guide QuenchGone21™ Speciality Test Kit QG21S-50 / QG21St-100 2G.

b) CFU (colony forming units)

As an alternative to method a, conventional microbiological methods can be used to determine the microbial contamination, such as dilution in a suitable medium (if necessary) followed by spreading the sample onto agar plates, comprising a suitable growth medium, and incubating e.g. overnight or 24h at 30 or 37°C and counting colonies..

**Example 7: household and professional dishwashing**

For household and professional dishwashing, the active ingredient is added 0.1-5% to make anionic, cationic, or non-ionic surfactant-based soaps or detergents. For machine-use soap blocks, liquid detergents in same concentration of the active ingredient and conditioning process liquids as rinsing aids, machine cleaning compositions is used. The biocidal effect here is tested as a test on the stock soap container and on the washing solution as it is intended. Both is tested against a blank and heavy contaminated reference by temperature accelerated and long-term incubated tests in LuminUltra® equipment (e.g. according to **Examples 3-6**). The pH-buffering action of NBDA on ampholytic basis makes formulations with fewer and more healthy ingredients possible.

A recipe for a liquid dishwashing compound is modified by replacing (or substituting) the commercial biocides (e.g. MIT and/or BIT) with 0.01-1% (by weight) of N-butyldiethanolamine, which may further comprise pH adjustment to the formulation towards better skin compatibility, thereby easing pH-neutral behaviour.

The N-butyldiethanolamine-comprising sample is subjected to a LuminUltra® test, as described in Example 6, for determining the biocidal function, where it is compared to 2 controls, i.e. dishwashing soap without MIT and BIT & N-butyldiethanolamine, and soap with the normal biocide pack-age. This test is performed in 32°C incubation, and with selected typical species of contaminants.

The results show a biocidal effect of N-butyldiethanolamine comparable to or even surpassing the conventional biocide.

**Example 8 - wet disinfection tissues or clean wipes**

For conditioned wet disinfection tissues or clean-wipes an addition of 0.1-2% is suited for surface disinfection in combination with either ethanol and/ or 2-propanol (isopropylalchohol) making the alcohol >70%. Used as a spray on disinfectant also to fight viral contamination on skin glycerol may be added. This application further encompasses the use as disinfection method for air-conditioning machines and trays for collection of condensed water. Also, in disinfection between routines in kitchens, slaughterhouses, diaries and other food processing plants, installations or working areas this method is suited. Testing of this biocidal action is made on contaminated and microbial doped samples of the product further incubated and tested by the method of LuminUltra® detection (**Example 6**).

A recipe for a liquid disinfection compound is modified by replacing (or substituting) the quaternary ammonium compound benzalkonium chloride with 1-5% (by weight) of N-butyldiethanolamine

The N-butyldiethanolamine-comprising sample is subjected to a LuminUltra® test, as described in Example 6, for determining the biocidal function, where it is compared to 2 controls, i.e. soap without conventional biocide & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable or even surpassing benzalkonium chloride in function.

### Example 9 - high pressure cleaning systems:

For use in high pressure cleaners 0.1-2% is added to the detergent solution in water to remove and protect from algae attack on pavements and roofing. The algae attack is tested by observing the survival rate of the geography-important algae types in question to the treatment, also by ATP measurement in as example LuminUltra® sampling vials (**Example 6**).

A recipe for algae removing compound is modified by replacing (or substituting) the quaternary ammonium compound benzalkonium chloride with 1-5% (by weight) ofN-butyldiethanolamine The N-butyldiethanolamine-comprising sample is subjected to a LuminUltra® test, as described in Example 6, for determining the biocidal function and the removal of algae, where it is compared to 2 controls, i.e. soap without conventional biocide & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable or even surpassing benzalkonium chloride in function.

### Example 10: cleaning solutions for veterinary use

For veterinary use cleaning solutions with the herein described active ingredient is used in 0.1-3% concentration in detergent dissolved in water. By high-pressure spraying, rinsing or washing this composition is suited for cleaning and preservation of a nonactive microbiological environment in stables, feeding systems, stock for feedstuff and general handling areas indoors for animals. Test of these is performed as standard swab tests as performed routinely by veterinarians.

A recipe for a liquid disinfection compound for use in stables and environments for animals in captivity is modified by replacing (or substituting) the quaternary ammonium compound benzalkonium chloride and/or the also used glutaraldehyde with 1-5% (by weight) ofN-butyldiethanolamine

The N-butyldiethanolamine-comprising sample is subjected to a LuminUltra® test, as described in Example 6, for determining the biocidal function, where it is compared to 2 controls, i.e. soap without conventional biocide & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable or even surpassing both benzalkonium chloride and glutaraldehyde in function.

### Example 11 - cleaning of waterpipes

For cleaning of waterpipes from existing build-up of microbial growth a solution, preferably hot or cold, of 0.1-2% active ingredient is flushed through the tubes to ascertain a treatment time of over 1 hour. Also, in hydraulic systems operating by water pressure this method is suited, but as a permanent addition to the hydraulic fluid. Here especially the test for legionella contamination needs a in situ test performed by sampling water from different locations in the system and using the LuminUltra® test (**Example 6**) as described before including addition of a growth medium or nutrient to force the growth of legionella.

A recipe for a liquid disinfection compound for use in pipes or tube form fighting microbial attack and growth of as example legionella is modified by replacing (or substituting) the quaternary ammonium compound benzalkonium chloride with 1-5% (by weight) of N-butyldiethanolamine.

The N-butyldiethanolamine-comprising sample is subjected to a LuminUltra® test, as described in Example 6, for determining the biocidal function, where it is compared to 2 controls, i.e. soap without conventional biocide & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable to benzalkonium chloride.

## Example 12 - industrial cooling processes

For industrial cooling processes, or moisturizing processes where the water is constantly recirculated, and not interchanged with freshwater an addition of 0.1-2% active ingredient fight airborne microbial attack as well as biological attack emerging in longer periods of inactivity, like in vocational periods. Testing of this is done by sampling and forced incubation with a growth nutrient in LuminUltra® determination of ATP (**Example 6**).

A recipe for a waterborne cooling compound for use in industrial cooling processes, as cutting oil or hydraulic fluid is modified by replacing (or substituting) the quaternary ammonium compound benzalkonium chloride with 1-5% (by weight) of N-butyldiethanolamine.

The N-butyldiethanolamine-comprising sample is subjected to a LuminUltra® test, as described in Example 6, for determining the biocidal function, where it is compared to 2 controls, i.e. soap without conventional biocide & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable or surpassing benzalkonium chloride.

## Example 13 - water heating systems

Renewable energy heating systems for water like heat pumps, solar panels or other heated devices used for central-heating systems in domestic homes or in industry is protected against microbial deterioration attack by adding 0.1-3% of the active ingredient. The renewable energy systems have difficulty to reach a pasteurizing temperature for sufficient time and in sufficient frequency to protect against this type of attack by temperature alone. Here the additive further pH-stabilizes and counteracts acid attacks. Here especially the test for legionella contamination needs a in situ test performed by sampling water from different locations in the water delivery system using e.g. the LuminUltra® test (**Example 6**) as described before including addition of a growth medium or nutrient to force the growth of legionella.

A commercial product for use in circulating heat-transfer systems for use in pipes, fighting microbial attack and growth of as example legionella is modified by replacing (or substituting) the quaternary ammonium compound benzalkonium chloride with 1-5% (by weight) of N-butyldiethanolamine.

The N-butyldiethanolamine-comprising sample is subjected to a LuminUltra® test, as described in Example 6, for determining the biocidal function, where it is compared to 2 controls, i.e. soap without MIT and BIT & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable to benzalkonium chloride and an excellent protection against rust presumably based on the stabilisation of the pH. It is submitted that other sec. or tert. amines as disclosed herein (see e.g. first aspect) may provide a similar protection against rust, such a protection being better than when using a conventional biocide.

## Example 14 - watersystems for toilets- and/or washing facilities

For public and private toilet-, bath- and wash-facilities an addition of 0.1-1% to the water stream is lowering the exposure to germs and potential pathogens. Test of this is done by spot wise regular sampling and test in incubated sample vials for the LuminUltra® test.

A commercial product for use in watersystems for use in toilets, washing facilities or public baths, fighting microbial attack and growth of as example legionella is modified by replacing (or substituting) the quaternary ammonium compound benzalkonium chloride with 1-5% (by weight) of N-butyldiethanolamine.

The N-butyldiethanolamine-comprising sample is subjected to a LuminUltra® test, as described in Example 6, for determining the biocidal function, where it is compared to 2 controls, i.e. soap without MIT and BIT & N-butyldiethanolamine, and disinfectant solution with the normal content of benzalkonium chloride. This test is performed in 32°C incubation, and with selected typical species of contaminants.

The results show a biocidal effect of N-butyldiethanolamine comparable to benzalkonium chloride and an excellent protection against rust.

## Example 15 - gels and nanomaterials

Gels and nanomaterials provided by the use of water comprising 0.1-1.0% additive described herein to prevent micro life to form and develop in the colloid structure or on surfaces on the nanomaterial. Test of the biocidal action will proceed as needed for the special application demands, being medical, chemical or food related (**Examples 3-6**).

**Example 16 - dispersion of polymers /high MW material**

Dispersion of polymers and other high molecular weight materials is protected by adding 0.1-2% additive directly into the material at a chosen point of the manufacturing process. If bacterial attack is already developed during an intermediate period with no precautions the addition of hydrogenperoxide will accelerate the fast kill of microorganisms but will also tend to deteriorate the herein said additive. Therefore, if this situation is relevant the amounts must be adjusted accordingly. Here the LuminUltra® test (**Example 6**) is performed by sampling and incubating in the relevant delivered vials with corresponding reagents.

A recipe for a Styrene-Butadiene-Rubber (SBR)-emulsion is modified by replacing (or substituting) the commercial biocide(s) such as MIT and/or BIT with N-butyldiethanolamine, which may further comprise pH adjustment to the formulation, improvement of stability of micelles and lower overall VOC emissions.

The N-butyldiethanolamine-containing sample is subjected to a LuminUltra® test, as described in Example 6, for determining the biocidal function, where it is compared to 2 controls, i.e. emulsion with N-butyldiethanolamine, and soap with the normal biocide pack-age. This test is performed in accelerated 32°C incubation, and with selected species of contaminants being in the manufacturing environment or in the application processing environment.

The results show a biocidal effect of N-butyldiethanolamine comparable and better than the normal biocide package.

**Example 17- water-borne emulsions**

Waterborne emulsions are protected by addition of 0.1-2% additive. Emulsions made from oils and fatty acids of biological origin is especially well suited, but also oil/oil/water emulsions for lubrication, heat transfer or hydraulic purposes is well protected by this. For skin contact none of the components should have allergens or should act as plasticizers thereby penetrating not only polymer or rubber gloves but also the epidermis itself. Test of the biocidal action is performed as example by the LuminUltra® method (**Example 6**).

**Example 18 - suspensions**

Suspensions in water is protected by adding 0,1-2% of the said additive to the water phase, where here also the stabilization and stability of the suspension is positively influenced as well.

Test of the biocidal long term protection is performed as an accelerated, and with nutrient enforced growth rate performed LuminUltra® test (**Example 6**).

The recipe for a stabilized suspension is modified by replacing (or substituting) the commercial biocides MIT and BIT with N-butyldiethanolamine, which may further comprise pH adjustment to the formulation, improvement of stability of surfactant protected suspended micelles and lower overall VOC emissions for the suspension as a whole.

The N-butyldiethanolamine-containing sample is subjected to a LuminUltra® test, as described in Example 6, for determining the biocidal function, where it is compared to 2 controls, i.e. waterborne emulsion with N-butyldiethanolamine, and same with the normal biocide package. This test is performed in accelerated 32°C incubation, and with selected species of contaminants being in the manufacturing environment or in the application processing environment.

The results show a biocidal effect of N-butyldiethanolamine comparable and better than the normal biocide package. Test of the biocidal long-term protection is performed as an accelerated, and with nutrient enforced growth rate performed LuminUltra® test (**Example 6**).

**Example 19 - dispersions, emulsions, and suspensions**

Combination products being dispersions, emulsions, and suspensions due to the mixture of the compounds, is protected from microbiological attack by adding 0.1-2% of the said additive to the water phase. Here the pH stabilization on ampholytic reaction further contributes to stabilization of micelles made by van de Wall electric complexes in the water phase. Biocidal test is performed as an accelerated test using LuminUltra® equipment or the like (**Example 6**).

The N-butyldiethanolamine-containing sample is subjected to a LuminUltra® test, as described in Example 6, for determining the biocidal function, where it is compared to 2 controls, i.e. waterborne emulsion with N-butyldiethanolamine, and same with the normal biocide package. This test is performed in accelerated 32°C incubation, and with selected species of contaminants being in the manufacturing environment or in the application processing environment.

The results show a biocidal effect of N-butyldiethanolamine comparable and better than the normal biocide package. Test of the biocidal long-term protection is performed as an accelerated, and with nutrient enforced growth rate performed LuminUltra® test (**Example 6**).

### Example 20 - paints and coatings

Paints and coatings are protected by preserving the binder system, being either based on dispersion or emulsion types of binders, by adding 0.1- 2% of the hereby described additive. Especially in the field of using recycled polymers or polymers of biological origin based on starch, polylactic acid, lignin or cellulose dispersed in water this method of biocidal action and long term in-can protection is valuable. Accommodation of viscosity controlling additives, drying promoters, anti-sagging agents and colour additives hereby is done either before or after final compounding. Mostly the primary binder dispersion is protected initially from the supplier of this raw material. Stability tests and biocidal action is performed by methods being standard for the applications in question.

A starting point formulation of a typical paint recipe is e.g.:

| Component | Type | grams |
|---|---|---|
| Tap water | | 187.5 |
| Acticide MBS | In can biocide | 3 |
| Lopon 800 | Dispersing agent | 2 |
| Targon 42 | Dispersing agent | 4 |
| Tap water | | 33.5 |
| Lopon E81 | Defoamer | 3 |
| Ti-Pure R706 | Titaniumdioxide | 210 |
| Omyacarb 10 | Calcite | 81.75 |
| Finntalc M05N | Talc | 81.75 |
| Natrosol 250 MBR | Thickener (cellulosic) | 4.25 |
| Orgal PST 100 E | Styrene Acrylic emulsion (50%) | 268.2 |
| SharkDispersionCSX | PVB dispersion (45,2%) | 99.25 |
| Lopon E81 | Defoamer | 2 |
| Tap Water | Viscosity adjustment | 19.8 |
| Total | | 1000 |

Here the in-can biocide is replaced with 0.3% N-butyldiethanolamine. The sample is subjected to a LuminUltra® test, as described in Example 6, for determining the biocidal function, where it is compared to 2 controls, i.e. paint with N-butyldiethanolamine, and same with the normal in can biocide package. This test is performed in accelerated 32°C incubation, and with species of contaminants being in the manufacturing environment or in the open everyday application processing environment.

### Example 21 - lacquer

Lacquer based on waterborne dispersions of polymer and/or resins are protected by adding 0.1-2% additive. Test of biocidal action follow the standard procedures for the products in question and follows essentially the outline of **Example 20.**

### Example 22 - water based ink

Water based inks is added 0.1-2% of the water content, and the high boiling point of the additive in mention, 275 °C, gives high-temperature boiling nozzles functionality without smell, and with a noticeable self-cleaning effect. Test of biocidal action follow the standard procedures for the products in question.

Ink based on PVB dispersion is made with the MIT/BIT biocide replaced with 0.5% N-butyldiethanolamine. The sample is subjected to a LuminUltra® test, as described in **Example 6,** for determining the biocidal function, where it is compared to 2 controls, i.e. paint with N-butyldiethanolamine, and same with the normal in can biocide package. This test is performed in accelerated 32°C incubation, and with species of contaminants being in the manufacturing environment or in the open ink application processing environment.

### Example 23 - peelable and functional coatings

Peelable and functional coatings working as temporary shielding of underlaying metal, building or glass structures is protected likewise with 0.1-2% of before mentioned additive. Test of biocidal action follow the standard procedures for the products in question follow the standard procedures for the products in question and follow essentially the outline of **Example 22.**

### Example 24 - precoats for carpets

Precoats for carpets are constituted of complex mixtures of polymer binder being dispersed or emulsified, and combined with mineral fillers, antistatic, rheological modifiers, colorants and foaming surfactants, and is preserved before application to the carpet backing by adding 0.1-3% of additive. This remains in the precoat and constitutes a long-term bacteria, fungi, yeast, and mold protection. Since the precoat itself is forcedried at high temperature, the biocidal test shall be restricted to the open time of the precoat-raw composition, meaning that LuminUltra® test (**Example 6**) is adequate.

In a precoat composition containing SBR (Styrene-Butadiene-Rubber) the biocide MIT/BIT system was substituted with 0.5% NBDA with same performance as the origin. Also, precoats based on PVB-dispersion, plastisols and natural latex/gum-species showed same favourable biocidal protection.

### Example 25- glue and adhesives

Glue and adhesives made on basis of waterborne dispersions, emulsions, suspensions and combinations hereof will likewise be protected by adding 0.1-2% of said additive. Hereby also is added a certain long-term protection of the gluing zone. LuminUltra® method (**Example 6**) of determining the residual biological activity is well suited for testing the product.

### Example 26 - wood impregnation

Wood impregnation based on water-based compound systems will be protected by adding 0.1-3% of said additive, which in diffusion, capillary motion and wetting will impregnate the wooden fibers with a biocidal residue after dry ing. For archeological purposes conservation in water will benefit from this biocidal effect since exchange of water with conserving fluids and polymers hereby can proceed for prolonged time. LuminUltra® method (**Example 6**) of determining the residual biological activity is well suited for testing the product.

### Example 27- Impregnation of paper, cardboard, etc

Impregnation of paper, cardboard and packaging foil, boxes and containers is important to avoid buildup of mold, smell and growth of unwanted microbes caused by spillage or poor storing conditions. Here in the paper-pulp is added 0.1-2% additive, either to the cellulosic fibers for impregnation or to the starch/modified starch used as pulp-binder. LuminUltra® method of determining the residual biological activity is well suited for testing the product.

### Example 28 - Spray disinfection

Spray disinfection of trucks, cars, trains, airplanes, pallets and transport containers is done by diluting 0.1-2% additive in water, formulated with or without surfactants, emulsified waxes or alike. This water bath can be recirculated through centrifuge filters and further be treated with high density UV-radiation. LuminUltra® method of determining the residual biological activity is well suited for testing the product.

### Example 29 - disinfection of public areas

Disinfection of public areas with microbial contamination by spray methods using 0.1-5% additive in water. Also, here surfactants and fragrances may be added. LuminUltra® method (Example 6) of determining the residual biological activity is well suited for testing the product.

### Example 30- recirculated water from washing stations

Treatment of recirculated water from washing stations for cars, trucks and other vehicles in wash tunnels is made by adding 0.1-1% of said additive to the water, with or without soap, surfactants, or emulsified wax. LuminUltra® method (**Example 6**) of determining the residual biological activity is well suited for testing the product.

### Example 31 - foaming applications

Foaming applications uses dispersions, emulsions or other composed water borne blends. Here 0.1-2% additive protects against microbiological degradation, and the foaming given extremely large surfaces, which are susceptible for easy contamination is better protected. LuminUltra® method (**Example 6**) of determining the residual biological activity is well suited for testing the product.

### Example 32: viricidal effect

Virus of different origin is hindered by the biocidal action of said additive. Products for virus reduction is made with 2-5% of said additive and is delivered as spray, wet application by cloth or sponge or in combination products using quaternary ammonium compounds, disinfecting alcohols, anionic surfactants, and conditioners like glycerol. LuminUltra® method of determining the residual biological activity including the viral detection modes also being integrated in this method is well suited for testing the product (see e.g. https://www.prnewswire.com/news-releases/luminultra-files-patent-for-the-worlds-first-rapid-on-site-covid-19-wastewater-testing-solution-301156908.html; https://www.luminultra.com/covid-19-testing/surface-testing/).

### Example 33: treatment of drinking water

Preventive treatment of drinking water for storage in tanks, drums, or other containers for temporary use in situations not facilitating direct access to proper water supply:
The active ingredient N-butyldiethanolamine as described herein is added 0.01- 1% directly to the water. The water shall if not contaminated at start be added 0.01-0.2%, and if contaminated 0.2-1%. Contaminated water treated in this way shall after 24-72 hours be spot tested, and if necessary be additionally added 0.01-0.5% hydrogenperoxide. The peroxide degradation and the degradation of N-butyldiethanolamine by this makes the level of treatment after function to be below 0.2%. The toxicity LD50 4250 mg/kg for rats requires human consummation of 319 gram pr 75 kg, equivalent of a direct consummation of more than 150 kg water. In this way chlordioxide, hypochlorite solutions and electrolytic generated chlorine gas is substituted in a safer way. LuminUltra® method of determining the residual biological activity is well suited for testing the product.

### Example 34: toothpaste

In toothpaste generally is used the antiseptic function of 0.5% sodiumlaurylsulfate and 0.5% sodium benzoate: Here a similar concentration of the active ingredient of this patent 0f 0.5% will substitute the sodiumbenzoate, and further due to well-known practice stabilize the colloidal dispersion/emulsion/gel both physical but also by buffering pH.
A toothpaste recipe for a commercially available toothpaste comprising benzoate (e.g. 0.5% ) is modified by replacing (or substituting) benzoate with a similar concentration (by weight) of N-butyldiethanolamine, which may comprise pH adjustment.
pH-adjustment can be performed according to **Example 4.**
The N-butyldiethanolamine-comprising sample is subjected to a test for determining the biocidal function, where it is compared to 2 controls, i.e. toothpaste without benzoate & N-butyldiethanolamine, and toothpaste with benzoate.
The results show a biocidal effect of N-butyldiethanolamine comparable or even better than benzoate.

### Example 35 - skin and/or face-care product

Conservation of skin- and face-care products is always necessary in the partially waterborne cosmetic products since hannful and allergen forming bacteria, yeast, fungi and mold may form. The function of the preservation is necessary 2-ways to protect the product itself against degradation, but also to protect skin- and face being treated with the substance against from insitu infection and sensibilization.
Use of sodiumbenzoate, parabens and benzylalchohol can be substituted in equal amount by the in this patent described active ingredient. Further the calculation of the composite product may reduce the active ingredient to cover the waterphase only.
MIT, CMIT,Hydantoin, ureaimidazollidinyl and diazolidinylurea, isobutylparaben, isopropylparaben already are problematic and regulated, but propyl- and butylparaben are only restricted in children's products.
Benzylalchohol also working as fragrance may cause allergy and can hereby be avoided. Such products further gain by the buffering action of the ampholytic NBDA making pH-stability in cosmetical products only depend on other additives. The test of such products can be made by temperature accelerated and longtenn incubated tests of doped contaminated samples and control references being tested by LuminUltra® equipment and tATP measurement.

A recipe for a commercially available moisturizing crème or analogue cosmetic products for skin- or face-use recipe comprising sodiumbenzoate, parabens, MIT, CMIT,Hydantoin, ureaimidazollidinyl and diazolidinylurea, isobutylparaben, isopropylparaben and benzylalchohol is modified by replacing (or substituting) benzoate and the commercial biocides with a similar concentration (by weight) of N-butyldiethanolamine, which may further comprise pH adjustment to the formulation towards better skin compatibility, thereby easing pH-neutral behaviour and experience in the product.

The N-butyldiethanolamine-comprising sample is subjected to a LuminUltra® test, as described in Example 6, for determining the biocidal function, where it is compared to 2 controls, i.e. crème without benzoate, MIT and BIT & N-butyldiethanolamine, and crème with benzoate and the normal biocide package. This test advantageously can be performed in 32°C incubation, and with selected species of contaminants being active on the skin itself, and in contamination to open or broken package or containers.

The results show a biocidal effect of N-butyldiethanolamine comparable or even better than the normal biocide package giving new formulating latitude to less harmful constituents than normally used.

**Example 36 - swimming pools:**

In swimming pools is used 0.1-0.5% of the herein described active component to directly substitute other preserving or disinfecting methods.

This can be combined with a treatment with hydrogenperoxide for fast reducing contamination of tubing and pumps, as well be combined with frequent used UV sterilization destroying the RNA of micro life. A combination with chlorine-products, iodine-products, and metallic-ion based products cannot be recommended and this method replaces all of those previously used. A combination with electrochemical methods is also to avoid since the redox-electrode processes may produce decomposition products which will lower the efficiency of the method. Tests is done by comparing references, also such being treated with traditional products, by temperature accelerated and longterm incubated tests of doped contaminated samples and control references being tested by LuminUltra® equipment and tATP measurement. Further pH-, rH- and a nephelometer will be advised for ensuring chemical, skin- and optical transparency of the water.

A recipe for commercially available biocide preservatives for swimmingpools is modified by replacing (or substituting) chlorine compounds with a similar concentration (by weight) of N-butyldiethanolamine, which may further comprise pH adjustment to the formulation towards better skin compatibility, thereby making the water more agreeable by chemical reaction, odour and/or taste.

The N-butyldiethanolamine-comprising water sample is subjected to a LuminUltra® test, as described in Example 6, for determining the biocidal function, where it is compared to 2 controls, i.e. without chlorine salts and NDBA, and water with the normal chlorine package. This test advantageously can be performed in 32°C incubation, and with selected species of frequent contaminants from indoor or outdoor environments.

The results show a biocidal effect of N-butyldiethanolamine comparable or even better than chlorine based traditional solutions.

**Example 37 - hand cleansers and/or disinfection products for skin**

In hand cleansers and disinfection products for skin and face NBDA is used in 0.1-1% concentration to maintain and assure preservation of the product in opened form and will in this way replace MIT and BIT extensively. The test of such products can be made by temperature accelerated and longtenn incubated tests of doped contaminated samples and control references being tested by LuminUltra® equipment and tATP measurement. Here also the pH-buffering action of NBDA on ampholytic basis will make formulations with fewer and more healthy ingredients possible.

A recipe for a commercially available hand cleanser comprising sodiumbenzoate, parabens, MIT, CMIT, Hydantoin, ureaimidazollidinyl and diazolidinylurea, isobutylparaben, isopropylparaben and benzylalchohol is modified by replacing (or substituting) sodiumbenzoate and the commercial biocides MIT and BIT with a similar concentration (by weight) of N-butyldiethanolamine, which may further comprise pH adjustment to the formulation towards better skin compatibility, thereby easing pH-neutral behaviour.

The N-butyldiethanolamine-comprising sample is subjected to a LuminUltra® test, as described in Example 6, for determining the biocidal function, where it is compared to 2 controls, i.e. hand cleanser without benzoate, MIT and BIT & N-butyldiethanolamine, and handcleanser with benzoate and the normal biocide package. This test advantageously can be performed in 32°C incubation, and with selected species of contaminants being active on the skin itself, and in contamination to open or broken package or containers.

The results show a biocidal effect of N-butyldiethanolamine comparable or even bet-ter than the normal biocide package.

**Example 38 - antibacterial soap**

In antibacterial soaps the active ingredient such as NBDA is used as 0.1- 3% additive for use of private persons or healthcare personnel from hospitals or institutions. The soap is conditioned to be either liquid or solidified and in formulation tested by temperature accelerated and long-term incubated tests of doped contaminated samples and control references being tested by LuminUltra® equipment and tATP measurement. Further wash tests of contaminated specimens of contaminated microfibercloths is additionally tested by bacterial growth in agar-petri dishes incubated for a prolonged period at optimum 32 °C.

A recipe for a commercially available soap is modified by replacing (or substituting) sodiumbenzoate and the commercial biocides MIT and BIT with a similar concentration (by weight) of N-butyldiethanolamine, which may further comprise pH adjustment to the formulation towards better skin compatibility, thereby easing pH-neutral behaviour.

The N-butyldiethanolamine-comprising sample is subjected to a LuminUltra® test, as described in Example 6, for determining the biocidal function, where it is compared to 2 controls, i.e. soap without benzoate, MIT and BIT & N-butyldiethanolamine, and soap with benzoate and the normal biocide pack-age. This test is performed in 32°C incubation, and with selected species of contaminants being on the skin itself, and in contamination to open or broken packages or containers.

The results show a biocidal effect of N-butyldiethanolamine comparable or even better than the normal biocide package.

**Example 39: NBDA biocide as a buffering and stabilizing additive**

NBDA possesses amphoteric properties, and the resulting equilibrium mixture in water therefore tends to buffer and stabilize pH making stability improvement for alkaline dispersions very pronounced. A direct buffering with organic acids like citric acid or sulphuric acid is possible. Hereby micelles being result of the phase inversion during the dispersion process are stabilized by amphoions.

**Example 40 - food preservative**

Often, preservatives like sodiumbenzoeate, sulfites, nitrites, nitrates and nitrosamines are used in food. Also butylated hydroxyanisole and butylated hydroxytolouene are widely used. Using e.g. the guidelines of Examples 3-6, substitution of one or more of such food preservatives with NBDA is performed using comparable amounts and shows compatibility and suitable preservation effect(s) as the beforementioned preservative(s).

**Example 41 - minimal inhibitory concentrations (MIC) and the minimal bactericidal concentrations (MBC) in situ against 10 indicator strains**

In a series of tests it was concluded that the tested substance, in the form of NBDA in various concentrations, exhibited a broad spectrum of antimicrobial activity. The tested substance was active against all tested Gram negative, Gram positive bacteria, yeasts and mould, known as most common food spoilage and pathogenic organisms, as well as organisms causing spoilage in pharmaceutical industry and cosmetics. Furthermore, its activity was exhibited by bacteriostatic (MIC) and bactericidal (MBC) values. Considering the ratio of MIC and MBC values of the tested substance in relation to all 10 indicator strains, this tested substance can be considered as bactericidal and fungicidal agent.

For the tested substance, the stock solution was 10%.

List of indicator strains used:

| | |
|---|---|
| Gram-positive pathogenic bacteria | *Listeria monocytogenes* **ISI 22** |
| Gram-positive pathogenic spore forming bacteria | *Bacillus cereus* **ISI 842** |
| Gram-negative pathogenic bacteria | *Salmonella Infantis* **ISI 170** |
| Gram positive spoilage bacteria | *Leuconostoc mesenteroides* **ISI 504** *Streptococcus termophilus* **ISI 1563** *Lactobacillus brevis* **ISI 2269** |
| Gram-negative spoilage bacteria | *Pseudomonas aeruginosa* **ISI1462** |
| Pathogenic yeast | *Candida albicans* **ISI 1226** |
| Spoilage yeast | *Debaryomyces hansenii* **ISI 12** |
| Spoilage mould | *Aspergillus niger* **ISI 3** |

The results of the test are summarized in table V. Here it is seen that the NBDA is active from 0.16% (as bacteriostatic)

Table V

| Indicator strains | MIC (%) | MBC(%) |
|---|---|---|
| *Listeria monocytogenes ISI 22* | 1.25% | 2.5% |
| *Salmonella Infantis ISI 170* | 1.25% | 1.25% |
| *Bacillus cereus ISI 842* | 1.25% | 1.25% |
| *Pseudomonas aeruginosa ISI 1462* | 0.63% | 1.25% |
| *Lactobacillus brevis ISI 2269* | 0.16% | 0.31% |
| *Leuconostoc mesenteroides ISI 504* | 0.31% | 0.63% |
| *Streptococcus termophilus ISI 1563* | 0.63% | 1.25% |
| *Canidida albicans ISI 1226* | 0.63% | 1.25% |
| *Debaryomyces hansenii ISI 12* | 1.25% | 2.5% |
| *Aspergillus niger ISI 3* | 0.63% | 0.63% |

Test method

Minimal inhibitory concentration (MIC)

Minimum inhibitory concentrations (MICs) are defined as the lowest concentration of an anti-microbial that will inhibit the visible growth of a microorganism after a standardized incubation. In the present study, MIC assay was performed by pipetting robot. The principle is that an indicator microorganism at a defined cell density is cultured with a range of concentrations of the test compound, one concentration pr. well in a row on the microtiter plate. For bacteria and yeasts the minimal inhibitory concentration was detected as no increase of optical density (OD), for moulds microtiter plates were read visually. Each indicator organism is tested in duplicate and the MIC is calculated as the average of the two determinations. The tested concentrations of the antimicrobial substances were 2-fold dilutions from 5%.

All indicator organisms (see Table 2.) were pre-cultivated in a suitable growth medium and diluted in the same medium to give a final concentration in the assay of ~$1 \times 10^3$ cfu/ml. The microtiter plates were incubated under specific incubation conditions (see Table 3). Minimum bactericidal concentration (MBC)

Even when no growth is detectable in the MIC tests, it is possible that the microorganisms have survived the treatment i.e., they are not killed but just prevented from growing. In order to test for survivors, MBC plates were subsequently made from the MIC plates. After 48 hours, replicate microtiter plates were made, where the content of each well in the MIC plates was diluted 10-fold in fresh growth media in the MBC plate. The MBC plates were incubated at for the test organisms optimal growth temperatures, and outgrowth was monitored after 24, 48 and 72hours. The minimal bactericidal concentration is defined as the lowest concentration where outgrowth does not occur i.e., no survivors have been transferred from the MIC to the MBC plate.

Table VI: Growth media and incubation conditions

| Indicator strain | media | temperature/atmosphere | Reading points |
|---|---|---|---|
| *Listeria monocytogenes* ISI 22 | BHI | 37°C / aerobe | 24 h,48 h |
| *Salmonella* Infantis ISI 170 | BHI | 37°C / aerobe | 24 h, 48 h |
| *Bacillus cereus ISI 842* | BHI | 30°C aerobe | 24 h,48 h |
| *Pseudomonas aeruginosa ISI 1462* | BHI | 37°C / aerobe | 24 h,48 h |
| *Debaryomyces hansenii ISI 12* | BHI | 25°C / aerobe | 24 h, 48 h |
| *Lactobacillus brevis ISI2269* | MRS | 30°C aerobe | 24 h,48 h |
| *Leuconostoc mesenteroides* ISI 504 | BHI | microaerobic. 30°C | 24 h, 48 h |
| *Streptococcus termophilus* ISI 1563 | BHI | microaerophilic. 37°C | 24 h, 48 h |

(continued)

| Indicator strain | media | temperature/atmosphere | Reading points |
|---|---|---|---|
| *Canidida albicans* ISI 1226 | BHI | 25°C | 24 h, 48 h |
| *Aspergillus niger* ISI 3 | BHI | 25°C | 24 h,48 h,72h |

Minimal inhibitory concentration (MIC)

Minimum inhibitory concentrations (MICs) are defined as the lowest concentration of an anti-microbial that will inhibit the visible growth of a microorganism after a standardized incubation. In the present study, MIC assay was performed by pipetting robot. The principle is that an indicator microorganism at a defined cell density is cultured with a range of concentrations of the test compound, one concentration pr. well in a row on the microtiter plate. For bacteria and yeasts the minimal inhibitory concentration was detected as no increase of optical density (OD), for moulds microtiter plates were read visually. Each indicator organism is tested in duplicate and the MIC is calculated as the average of the two determinations. The tested concentrations of the antimicrobial substances were 2-fold dilutions from 5%.

All indicator organisms (see Table 2.) were pre-cultivated in a suitable growth medium and diluted in the same medium to give a final concentration in the assay of ~1 × 103 cfu/ml. The microtiter plates were incubated under specific incubation conditions (see Table 3).

Minimum bactericidal concentration (MBC)

Even when no growth is detectable in the MIC tests, it is possible that the microorganisms have survived the treatment i.e., they are not killed but just prevented from growing. In order to test for survivors, MBC plates were subsequently made from the MIC plates. After 48 hours, replicate microtiter plates were made, where the content of each well in the MIC plates was diluted 10-fold in fresh growth media in the MBC plate. The MBC plates were incubated at for the test organisms optimal growth temperatures, and outgrowth was monitored after 24, 48 and 72hours. The minimal bactericidal concentration is defined as the lowest concentration where outgrowth does not occur i.e., no survivors have been transferred from the MIC to the MBC plate.

Test results:

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| *Listeria mo-nocytogenes* | 0.045 | 0.046 | 0.047 | 0.938 | 1.027 | 1.074 | 1.165 | 1.184 | 1.182 |
| | 0.056 | 0.056 | 0.048 | 0.759 | 0.645 | 0.574 | 1.119 | 1.216 | 1.216 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| *Listeria mono-cytogenes* | 0.060 | 0.065 | 1.517 | 1.496 | 1.320 | 1.216 | 1.201 | 1.195 | 1.197 |
| | 0.062 | 0.070 | 1.533 | 1.507 | 1.310 | 1.141 | 1.059 | 1.097 | 1.009 |

**Comment:** Complete growth inhibition at **1.25%** (MIC value); bactericidal effect at **2.5%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| *Salmonella Infatis* | 0.044 | 0.047 | 0.046 | 0.905 | 1.389 | 1.566 | 1.640 | 1.501 | 1.662 |
| | 0.043 | 0.044 | 0.040 | 0.965 | 1.282 | 1.546 | 1.623 | 1.629 | 1.413 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| *Salmonella Infatis* | 0.066 | 0.068 | 0.074 | 1.806 | 1.786 | 1.826 | 1.841 | 1.858 | 1.732 |
| | 0.060 | 0.070 | 0.071 | 1.787 | 1.488 | 1.827 | 1.791 | 1.853 | 1.806 |

**Comment:** Complete growth inhibition at **1.25%** (MIC value), bactericidal effect at **1.25** %(MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| *Pseudomonas aeruginosa* | 0.045 | 0.046 | 0.045 | 0.047 | 1.668 | 1.888 | 1.938 | 1.894 | 1.725 |
| | 0.045 | 0.047 | 0.043 | 0.044 | 1.319 | 1.911 | 1.871 | 1.661 | 1.921 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| *Pseudomonas aeruginosa* | 0.066 | 0.071 | 0.071 | 1.909 | 1.477 | 1.680 | 1.779 | 2.186 | 1.360 |
| | 0.061 | 0.069 | 0.070 | 1.789 | 1.570 | 2.303 | 2.051 | 1.311 | 2.248 |

**Comment:** Complete growth inhibition at **0.63%** (MIC value); bactericidal effect at **1.25** %(MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| *Lactobacillus brevis* | 0.043 | 0.046 | 0.047 | 0.047 | 0.049 | 0.054 | 0.465 | 0.468 | 0.509 |
| | 0.040 | 0.049 | 0.045 | 0.046 | 0.048 | 0.057 | 0.586 | 0.485 | 0.458 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Lactobacillus brevis | 0.067 | 0.075 | 0.077 | 0.208 | 0.078 | 0.755 | 0.447 | 0.439 | 0.446 |
| | 0.068 | 0.077 | 0.077 | 0.248 | 0.077 | 1.060 | 0.470 | 0.455 | 0.463 |

Comment: Complete growth inhibition at **0.16%** (MIC value); bactericidal effect at **0.31%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| Leuconostoc mesenteroi- | 0.044 | 0.046 | 0.046 | 0.047 | 0.051 | 1.065 | 1.005 | 1.135 | 1.025 |
| | 0.041 | 0.046 | 0.047 | 0.049 | 0.052 | 0.990 | 1.027 | 1.104 | 0.943 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Leuconostoc mesenteroides | 0.066 | 0.076 | 0.075 | 1.440 | 1.452 | 1.337 | 1.413 | 1.449 | 1.449 |
| | 0.067 | 0.077 | 0.075 | 0.075 | 1.448 | 1.425 | 1.467 | 1.468 | 1.467 |

Comment: Complete growth inhibition at **0.31%** (MIC value); bactericidal effect at **0.63%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| Streptococcus thermophilus | 0.041 | 0.049 | 0.044 | 0.046 | 0.115 | 0.444 | 0.431 | 0.445 | 0.57 |
| | 0.042 | 0.049 | 0.045 | 0.043 | 0.108 | 0.438 | 0.462 | 0.473 | 0.515 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Streptococcus thermophilus | 0.062 | 0.070 | 0.072 | 0.277 | 0.802 | 0.251 | 0.311 | 0.307 | 0.346 |
| | 0.058 | 0.068 | 0.072 | 0.427 | 0.522 | 0.232 | 0.304 | 0.283 | 0.323 |

Comment: Complete growth inhibition at **0.63%** (MIC value); bactericidal effect at **1.25%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| Bacillus cereus | 0.087 | 0.100 | 0.108 | 0.664 | 0.811 | 0.716 | 0.880 | 0.953 | 0.797 |
| | 0.120 | 0.145 | 0.143 | 0.824 | 0.739 | 0.833 | 0.764 | 0.926 | 0.933 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Bacillus cereus | 0.066 | 0.072 | 0.075 | 1.117 | 1.277 | 1.286 | 1.098 | 1.106 | 1.261 |
| | 0.066 | 0.078 | 0.076 | 1.001 | 1.161 | 1.086 | 1.118 | 1.352 | 1.253 |

**Comment:** Complete growth inhibition at **1.25%** (MIC value); bactericidal effect at **1.25%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| Debaryomyces hansenii | 0.044 | 0.045 | 0.047 | 0.619 | 0.877 | 0.975 | 0.974 | 0.964 | 1.027 |
| | 0.043 | 0.046 | 0.047 | 0.582 | 0.973 | 1.145 | 1.114 | 1.224 | 1.215 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Debaryomyces hansenii | 0.068 | 0.074 | 1.333 | 1.387 | 1.432 | 1.473 | 1.472 | 1.493 | 1.491 |
| | 0.069 | 0.074 | 1.309 | 1.458 | 1.393 | 1.469 | 1.472 | 1.461 | 1.495 |

**Comment:** Complete growth inhibition at **1.25%** (MIC value); bactericidal effect at **2.5%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| Candida albicans | 0.042 | 0.047 | 0.051 | 0.056 | 0.886 | 1.118 | 1.223 | 1.243 | 1.272 |
| | 0.044 | 0.046 | 0.050 | 0.056 | 0.984 | 1.134 | 1.256 | 1.259 | 1.291 |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Can-dida albi-cans | 0.068 | 0.074 | 0.079 | 0.704 | 1.168 | 1.171 | 1.278 | 1.291 | 1.332 |
| | 0.068 | 0.075 | 0.080 | 1.435 | 1.175 | 1.485 | 1.314 | 1.314 | 1.357 |

**Comment:** Complete growth inhibition at **0.63%** (MIC value); bactericidal effect at **1.25%** (MBC)

**MIC data**

| percentage | 5.00 | 2.50 | 1.25 | 0.63 | 0.31 | 0.16 | 0.08 | 0.04 | 0.02 |
|---|---|---|---|---|---|---|---|---|---|
| Aspergil-lus niger | - | - | - | - | + | + | + | + | + |
| | - | - | - | - | + | + | + | + | + |

**MBC data**

| percentage | 5.00 | 2.50 | 1.25 | 0.63 | 0.31 | 0.16 | 0.08 | 0.04 | 0.02 |
|---|---|---|---|---|---|---|---|---|---|
| Aspergillus niger | - | - | - | - | + | + | + | + | + |
| | - | - | - | - | + | + | + | + | + |

**Comment:** Complete growth inhibition at **0.63%** (MIC value); bactericidal effect at **0.63%** (MBC)

**Example 42** - **Antiviral activity**

For testing of antiviral activity two concentrations, 1% and 5% of NBDA was tested on three different representative types of virus, being exposed 60 seconds to the compound in form of NBDA.

The tests were carried out according to ASTM E1052 Kill Time Screen test for the efficacy of n-butyldiethanolamine, BT-SSA-01 from Shark Solutions Aps. A summary of the results are shown in table VII.

Whereas the requirements to be a formal disinfectant, are not met in this test (as log 5 reduction required), there is a clear virucidal effect that apparently is reached already at 1% NBDA and does not appear to improve significantly at 5%. The mean log reduction is shown in the table below. It ranges from 0.09 to 0.34 in Norovirus.

A log reduction at 0.34 in practice means that 54% of Norovirus in eliminated in 60 seconds. Interestingly, Norovirus is non-enveloped, meaning without a lipopolysaccharide sheet. As is Covid. Whereas Vaccinia on the other hand is enveloped.

As such the present shows the activity of NBDA against both enveloped and non-enveloped vira. Norovirus is a frequent cause of diarrhea caused by contaminated fruits and vegetables and the current results indicates a pronounced effect at even low concentrations

Table VII:

| Mean log reduction after 60 seconds | | |
|---|---|---|
| Virus | 1.0% | 5.0% |
| Murine norovirus | 0.34 | 0.34 |
| Poliovirus | 0.26 | 0.17 |
| Vaccinia | 0.17 | 0.09 |

**Example 43 - Microbial activity in pre-formulated paints. PT6 Screening**

The microbial activity in relation to in-can preservation of paint was tested using three methods: ATP measurement, Aerobic growth on agar plate and Anaerobic growth on agar plate in low-air conditions. In the tests concentrations of 1, 2 and 5% NBDA was tested. It was concluded that all three concentrations reveal anti-microbial potentials. Furthermore, no significant dependence on concentration was shown in these specific tests.

Specific about the ATP measurements: test and method developed by Luminultra. A sample is taken from the test paint at a given time and the total amount of ATP is measured.

Total ATP amount are measured at Day 7 and 30.

After every ATP measurement, streaking of test material on agar plates has been performed. Growth test in aerobic and anaerobic environment are running in 1 and 14 days, respectively.

Test organism: Pseudomonas aeruginosa, ATCC 10145

The screening has been continuously expanded so that there are individual start-ups of three different trials. See further information in the overview table, table VIII.

*Table VIII overview.* Samples in test. Commercial biocide is Vinkocide CMIK ®. Acrylic paint is standard EN152 (modified without PT6 biocide). P. aeruginosa are inoculated in 200 $\mu$l concentration to paint sample size of 140 ml in a sterile "paint can-shape" container. Shark Solution candidate A and the commercial biocide are added to the standard paint and mixed in a shaker machine. Every matrix is tested in two replications (n=2) with an additional replication without inoculation of bacteria.

| Matrix | Shark Solution [%] | Commercial biocide [%] | Paint | Bacteria |
|---|---|---|---|---|
| A | 1 | 0 | Acrylic | *Pseudomonas aeruginosa* |
| B | 2 | 0 | Acrylic | *Pseudomonas aeruginosa* |
| C | 5 | 0 | Acrylic | *Pseudomonas aeruginosa* |
| D | 0 | 0 | Acrylic | *Pseudomonas aeruginosa* |
| E | 0 | 0,1 | Acrylic | *Pseudomonas aeruginosa* |

Table IX

| Matrix | Sam-ple# | Bacte-ria | Day 7 | | | Day 30 | | |
|---|---|---|---|---|---|---|---|---|
| | | | ATP | Anaero-bic | Aerobic | ATP | Anaero-bic | Aerobic |
| A | 1 | Yes | 50 | No growth | No growth | 171 | No growth | No growth |
| | 2 | Yes | 75 | No growth | No growth | 14 | No growth | No growth |
| | 3 | No | 15 | No growth | No growth | 24.259 | No growth | No growth* |
| B | 4 | Yes | 39 | No growth | No growth | 54 | No growth | No growth |
| | 5 | Yes | 47 | No growth | No growth | 13 | No growth | No growth |
| | 6 | No | 11 | No growth | No growth | 39 | No growth | No growth |
| C | 7 | Yes | 57 | No growth | No growth | 194 | No growth | No growth |
| | 8 | Yes | 63 | No growth | No growth | 578 | No growth | No growth |
| | 9 | No | 14 | No growth | No growth | 17 | No growth | No growth |
| D | 10 | Yes | 57.363 | Growth | Growth | 29.954 | Growth | Growth |
| | 11 | Yes | 52.953 | Growth | Growth | 33.8884 | Growth | Growth |
| | 12 | No | 31 | No growth | No growth | 61.273 | No growth | Growth |
| E | 13 | Yes | 22 | No growth | No growth | 12 | No growth | Minor growth |
| | 14 | Yes | 30 | No growth | No growth | 7 | No growth | No growth |
| | 15 | No | 33 | No growth | No growth | 24 | No growth | No growth |

*Table IX Results.* Red indicating microbial contaminations. Blue is minor contamination that could lead to a severe contamination or stay as "no problem". Green indicates no significant contamination. Total ATP limits, due to the manufacturer of the test: ATP 0-500 = no contamination, 500-1.000 = not critical but could lead to contamination, >1.000 = contamination, colour codes follow those limits. "Anaerobic growth day 30" were inoculated on day 20 and measured on day 31.

## Example 44 - in-can preservation. Long-time study

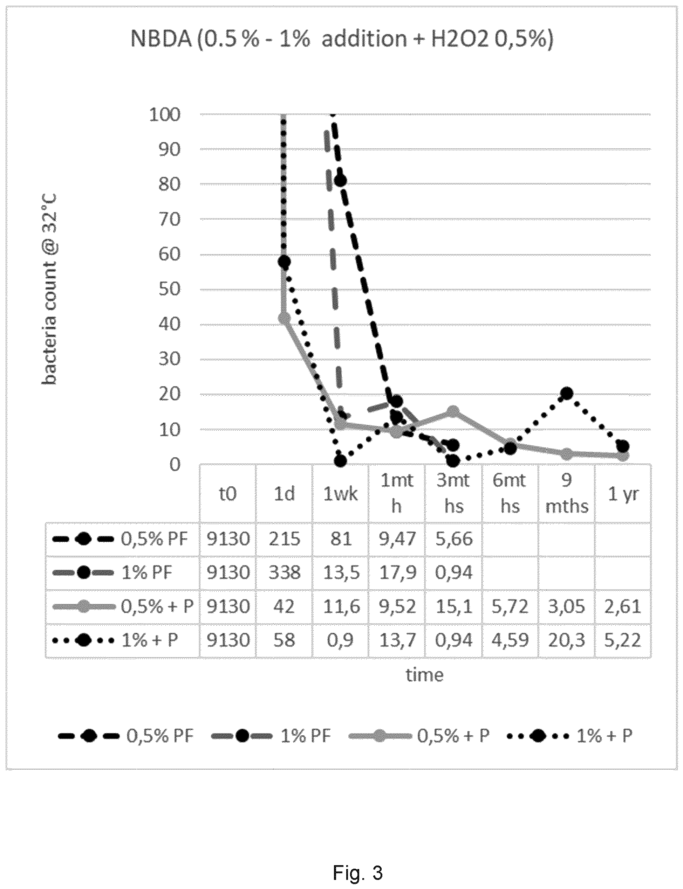

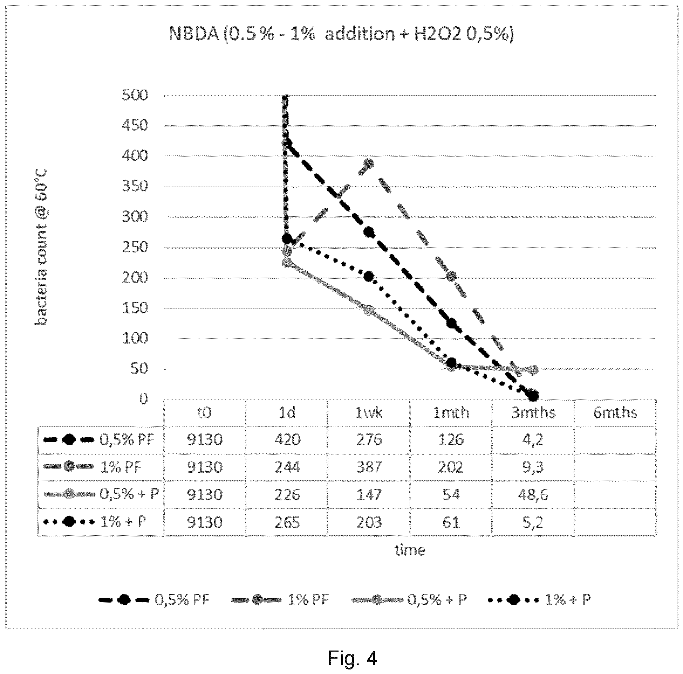

As seen in figures 1 - 4 NBDA in a concentration of 0.5% as sole biocide has shown consistent long term results for in-can preservation of paint. The results shown that 0.5% NBDA as sole active ingredient for in-can preservation are as successful over times up to at least as year as in-can preservation by 0.5% NBDA together with 0.5% hydrogen peroxide.

## Example 45 - Quantitative test for the evaluation of bacterial activity

Efficacy testing against bacteria of the product N-Butyldiethanolamine for the evaluation of bactericidal activity.
The test was carried out according to EN 1276, 2019: Chemical disinfectants and antiseptics - Quantitative suspension test for the evaluation of bactericidal activity of chemical disinfectants and antiseptics used in food, industrial, domestic, and institutional areas - Test method and requirements.
The test was carried out on four different bacteria strains:

*Pseudomonas aeruginosa,* ATCC 15442 (Gram negative)

*Escherichia coli,* ATCC 10536 (Gram negative)
*Staphylococcus aureus,* ATCC 6538 (Gram positive)
*Enterococcus hierae,* ATCC 10541 (Gram positive)

Contact time: 5 min. and 60 min respectively

PREPARATION

Working culture of test organisms

The growth media TSB (Tryptic Soy Broth) was separately inoculated with a culture loop of the microorganisms. The cultures were incubated at 37°C for 24 hours.

Interfering substance

Bovine Serum Albumin with a final concentration of 3 g/L

Neutralizer

Polysorbate 80 with a concentration of 30 g/L

PROCEDURE

The used method was Dilution-neutralization method.

Test

1 mL of interfering substance was pipetted into a tube and 1 mL of the test suspension was added and mixed. After 2 min. 8 mL of the product test solution was added and mixed. The solution was incubated at 20°C for 5 min. and 60 min. respectively.

After the incubation period 1 mL of the mixed solution was transferred to a new tube and 1 mL water and 8 mL neutralizer was added. After 5 min. of neutralization time 100 $\mu$L of the mixture was added to a petri-dish containing TSA media. Another 100 $\mu$L was added to a tube containing 900 $\mu$L 0.9% NaCl and a serial dilution to $10^{-5}$ was made.

Experimental condition control (A)

1 mL of interfering substance was pipetted into a tube and 1 mL of the validation suspen- sion was added and mixed. After 2 min. 8 mL of water was added and mixed. The solution was incubated at 20°C for 5 min. and 60 min. respectively.

After the incubation period 100 $\mu$L of the mixture was added to a petri-dish containing TSA media.

Neutralizer control (B)

8 mL of neutralizer, 1 mL of water and 1 mL of the validation suspension was mixed in a tube.

After 5 min. of neutralization time 100 $\mu$L of the mixture was added to a petri-dish containing TSA media.

Method validation (C)

1 mL of interfering substance was pipetted into a tube and 1 mL of diluent and 8 mL of product test solution in the highest concentration was added and mixed. The solution was incubated at 20°C for 5 min. and 60 min. respectively.

After the incubation period 1 mL of the mixed solution and 8 mL neutralizer was added to a new tube. After 5 min. of neutralization time 1 mL of the validation suspension of the validation suspension was added. After 30 min. of incubation at 20°C 100 $\mu$L was added to a petri-dish containing TSA media.

Incubation

The mixtures added to the agar plates were evenly distributed with a Drigalski-spatula. The agar plates were incubated at 37°C for 24 hours.

After incubation, the number of surviving bacteria (CFU) was counted. The test was performed in 3 replicates.

The same procedure was carried out for the tested contact times and for all tested concentrations of the product.

Table X

| Product N-Butyldiethanolamine | Bacterium *Pseudomonas aeruginosa* (CFU) | | | | | |
| | Contact time 5 | | | Contact time 60 | | |
| | CFU/plate | CFU/plate | CFU/plate | CFU/plate | CFU/plate | CFU/plate |
|---|---|---|---|---|---|---|
| **Concentration 1.5%** | >165 | >165 | >165 | >165 | >165 | >165 |
| **Concentration 3.0%** | >165 | >165 | >165 | >165 | >165 | >165 |
| **Concentration 6.0%** | >165 | >165 | >165 | 25 | 22 | 35 |

Table XI

| | Bacterium *Pseudomonas aeruginosa* (log10 reduction) | | | | | |
| | Contact time 5 min. | | | Contact time 60 | | |
|---|---|---|---|---|---|---|
| **Concentration 1.5%** | <5 | <5 | <5 | <5 | <5 | <5 |
| **Concentration 3.0%** | <5 | <5 | <5 | <5 | <5 | <5 |
| **Concentration 6.0%** | <5 | <5 | <5 | ≥5 | ≥5 | ≥5 |

Table XII

| Product N-Butyldiethanolamine | Bacterium *Escherichia coli* (CFU) | | | | | |
| | Contact time 5 min | | | Contact time 60 min | | |
| | CFU/plate | CFU/plate | CFU/plate | CFU/plate | CFU/plate | CFU/plate |
|---|---|---|---|---|---|---|
| **Concentration 1.5%** | >165 | >165 | >165 | >165 | >165 | >165 |
| **Concentration 3.0%** | >165 | >165 | >165 | >165 | >165 | >165 |
| **Concentration 6.0%** | >165 | >165 | >165 | 25 | 29 | 30 |

Table XIII

| | Bacterium *Escherichia coli* (log10 reduction) | | | | | |
| | Contact time 5 min. | | | Contact time 60 min. | | |
|---|---|---|---|---|---|---|
| **Concentration 1.5%** | <5 | <5 | <5 | <5 | <5 | <5 |
| **Concentration 3.0%** | <5 | <5 | <5 | <5 | <5 | <5 |
| **Concentration 6.0%** | <5 | <5 | <5 | ≥5 | ≥5 | ≥5 |

Conclusions

The purpose in this test was to demonstrate biocidal activity of the product N-ButylDiethanolamine. In this test the product was diluted with water to a final concentration of 1.5%, 3% and 6%.

According to the standard EN 1276; 2019 a reduction of ≥ 5 log unit is required to demonstrate biocidal activity.

*Pseudomonas aeruginosa*

The log changes of CFU for the *bacterium Pseudomonas aeruginosa* after incubation in presence of N-Butyldiethanolamine are higher than 5 log units for the tested 60 min. con-tact time and 6% concentration of the product.

*Escherichia coli*

The log changes of CFU for the *bacterium Escherichia coli* after incubation in presence of N-Butyldiethanolamine are higher than 5 log units for the tested 60 min. contact time and 6% concentration of the product.

*Staphylococcus aureus*

The log changes of CFU for the *bacterium Staphylococcus* aureus after incubation in presence of N-Butyldiethanolamine are lower than 5 log units for the tested contact times and concentrations of the product.

*Enterococcus hirae*

The log changes of CFU for the *bacterium Enterococcus hirae* after incubation in presence of N-Butyldiethanolamine are lower than 5 log units for the tested contact times and con-centra-tions of the product.

Assessment of the conditions of the test effectiveness are all satisfied according to the standard. The test is valid.

**Example 45 - activity against wood destroying basidiomycetes :**

EN 113, 2020: Durability of wood and wood-based products - Test method against wood destroying basidiomycetes. Assessment of biocidal efficacy of wood preservatives

Results:

Table XIV

| | Toxic value | |
|---|---|---|
| | Sol. conc. % w/w | Retention of product (kg/m$^3$) |
| *Coniophora puteana.* BAM Ebw. 15 | >1.43 | >9.86 |
| *Poria placenta.* FPRL 280 | 0.72-1.01 | 4.87-7.02 |
| *Gloeophyllum trabeum.* BAM Ebw. 109 | 1.01-1.43 | 6.85-10.03 |
| *Coriolus versicolor.* CTB 863 A | >2.20 | >15.40 |

Assessment:

The protection provided for the wood by the test preservative at the given concentration is deemed to be adequate if:

a) the corrected mean loss is less than 3.0 % (m/m)
b) not more than one specimen has suffered a loss in mass greater than 3.0 % (m/m) but less than 5.0 % (m/m)

Toxic values are expressed as the following two concentrations

a) the lowest concentration deemed to be adequate
b) the next concentration below a) tested at which the wood is not adequately protected.

Treatment:

The impregnation process was carried out on 24-03-2021 with the following conditions:

Pre-vacuum at 0.1 bar for 30 minutes.

Pressure of 13 bars for 60 minutes.

Product under test:

N-Butyldiethanolamine

Solvent:

Water

Wood Species:

Scots pine sapwood (*Pinus sylvestris L.*) for brown rot fungi.
Average density 589 kg/m3
Beech (*Fagus sylvatica L.*) for white rot fungi (*Coriolus versicolor*)
Average density 725 kg/m3

Duration of conditioning after treatment:

4 weeks according to EN 113 at 65% RH and 20°C until stable mass was obtained.

Sterilisation:

Ionising radiation ($2 \times 25$ kGy).

Date of exposure to fungi:

17-06

Date of final exposure to fungi:

07-10

Date of final examination:

11-10

Loss in mass of specimens for virulence control:

*Coniophora puteana* (BAM Ebw. 15): 40, 39, 44, 44, 41 and 46%
*Poria placenta* (FPRL 280): %: 22, 27, 20, 20, 23 and 27%
*Gloeophyllum trabeum* (BAM Ebw. 109): 35, 33, 33, 38, 38 and 41%
*Coriolus versicolor* (CTB 863 A): 39, 33, 22, 27, 23 and 32%

Evaluation:

Accept criteria for weight loss on virulence control specimens are fulfilled for all tested fungi.

Fungus: *Coniophora puteana* Product: N-Butyldiethanolamine Table XV

| Solution conc. | Block no C-series | Absorp. of solution | Retention | Mass loss | Cor-rec-tion | Corrected mass loss | Block no C-series | Mass loss cont-rols |
|---|---|---|---|---|---|---|---|---|
| % w/w | | g | kg/m³ | % | | % | | % |
| 0.00 | 1007 | 1131 | 0.00 | 36.1 | 0.5 | 35.6 | 1001 | 39.2 |
| | 1008 | 10.00 | 0.00 | 35.0 | | 34.5 | 1002 | 37.7 |
| | 1009 | 12.03 | 0.00 | 40.7 | | 40.2 | 1003 | 38.0 |
| | 1010 | 10.86 | 0.00 | 32.6 | | 32.1 | 1004 | 35.4 |
| Mean | | 11.05 | 0.00 | 36.1 | | 35.6 | | 37.6 |
| Std | | 0.85 | 0.00 | 3.4 | | 3.4 | | 1.6 |
| 0.36 | 1017 | 1224 | 2.34 | 39.4 | 0.2 | 39.2 | 1011 | 38.6 |
| | 1018 | 11.82 | 2.26 | 27.4 | | 27.2 | 1012 | 29.7 |
| | 1019 | 1122 | 2.14 | 47.8 | | 47.6 | 1013 | 41.6 |
| | 1020 | 11.58 | 2.21 | 32.5 | | 32.3 | 1014 | 32.6 |
| Mean | | 11.72 | 2.24 | 36.8 | | 36.6 | | 35.7 |
| Std | | 0.43 | 0.08 | 8.8 | | 8.8 | | 5.4 |
| 0.51 | 1027 | 11.91 | 3.22 | 42.6 | 0.2 | 42.4 | 1021 | 40.7 |
| | 1028 | 12.84 | 3.47 | 39.7 | | 39.5 | 1022 | 39.5 |
| | 1029 | 12.32 | 3.33 | 34.2 | | 34.0 | 1023 | 41.9 |
| | 1030 | 12.72 | 3.44 | 37.4 | | 37.2 | 1024 | 39.4 |
| Mean | | 12.45 | 3.37 | 38.5 | | 38.3 | | 40.4 |
| Std | | 0.42 | 0.11 | 3.6 | | 3.6 | | 1.2 |

EP 4 356 737 A2

(continued)

| Solution conc. % w/w | Block no C-series | Absorp. of solution g | Retention kg/m³ | Mass loss % | Cor-rec-tion | Corrected mass loss % | Block no C-series | Mass loss controls % |
|---|---|---|---|---|---|---|---|---|
| 0.72 | 1037 | 12.76 | 4.90 | 29.5 | | 29.8 | 1031 | 33.9 |
| | 1038 | 13.46 | 5.16 | 43.0 | | 43.3 | 1032 | 40.2 |
| | 1039 | 13.23 | 5.07 | 36.6 | -0.3 | 36.9 | 1033 | 37.4 |
| | 1040 | 13.03 | 5.00 | 39.3 | | 39.7 | 1034 | 47.3 |
| Mean | | 13.12 | 5.03 | 37.1 | | 37.4 | | 39.7 |
| Std | | 0.30 | 0.11 | 5.7 | | 5.7 | | 5.7 |
| 1.01 | 1047 | 12.89 | 6.95 | 36.7 | | 37.2 | 1041 | 46.6 |
| | 1048 | 12.51 | 6.75 | 41.4 | | 41.8 | 1042 | 44.4 |
| | 1049 | 12.48 | 6.73 | 44.6 | -0.5 | 45.1 | 1043 | 332 |
| | 1050 | 13.23 | 7.14 | 36.8 | | 37.3 | 1044 | 36.2 |
| Mean | | 12.78 | 6.89 | 39.9 | | 40.4 | | 40.1 |
| Std | | 0.36 | 0.19 | 3.8 | | 3.8 | | 6.4 |
| 1.43 | 1057 | 12.86 | 9.80 | 30.0 | | 31.1 | 1051 | 46.4 |
| | 1058 | 13.25 | 10.10 | 36.2 | | 37.2 | 1052 | 44.1 |
| | 1059 | 12.67 | 9.66 | 37.3 | -1.1 | 38.4 | 1053 | 47.1 |
| | 1060 | 12.97 | 9.88 | 36.7 | | 37.8 | 1054 | 44.8 |
| Mean | | 12.94 | 9.86 | 35.0 | | 36.1 | | 45.6 |
| Std | | 0.24 | 0.19 | 3.4 | | 3.4 | | 1.4 |

Fungus: *Poria placenta* Product N-Butyldiethanolamine Table XVI

| Solution conc. | Block no C-series | Absorp. of solution | Retention | Mass loss | Correction fac-tor | Corrected mass loss | Block no C-series | Mass loss controls |
|---|---|---|---|---|---|---|---|---|
| % w/w | | g | kg/m³ | % | | % | | % |
| 0.00 | 1107 | 1022 | 0.00 | 22.7 | | 22.2 | 1101 | 20.2 |
| | 1108 | 11.00 | 0.00 | 23.1 | | 22.6 | 1102 | 21.2 |
| | 1109 | 1220 | 0.00 | 23.6 | 0.5 | 23.1 | 1103 | 24.5 |
| | 1110 | 1222 | 0.00 | 24.8 | | 24.3 | 1104 | 21.4 |
| Mean | | 11.41 | 0.00 | 23.6 | | 23.1 | | 21.8 |
| Std | | 0.98 | 0.00 | 0.9 | | 0.9 | | 1.9 |
| 0.36 | 1117 | 11.07 | 2.11 | 14.2 | | 14.0 | 1111 | 26.6 |
| | 1118 | 12.67 | 2.42 | 19.4 | | 19.2 | 1112 | 21.3 |
| | 1119 | 1121 | 2.14 | 11.6 | 0.2 | 11.4 | 1113 | 22.4 |
| | 1120 | 12.56 | 2.40 | 12.5 | | 12.3 | 1114 | 25.9 |
| Mean | | 11.88 | 2.27 | 14.4 | | 14.2 | | 24.0 |
| Std | | 0.86 | 0.16 | 3.5 | | 3.5 | | 2.6 |
| 0.51 | 1127 | 12.79 | 3.46 | 14.2 | | 14.0 | 1121 | 30.7 |
| | 1128 | 12.65 | 3.42 | 17.3 | | 17.1 | 1122 | 27.6 |
| | 1129 | 1226 | 3.32 | 14.4 | 0.2 | 14.2 | 1123 | 25.9 |
| | 1130 | 13.03 | 3.52 | 13.5 | | 13.3 | 1124 | 21.0 |
| Mean | | 12.68 | 3.43 | 14.8 | | 14.6 | | 26.3 |
| Std | | 0.32 | 0.09 | 1.7 | | 1.7 | | 4.1 |

| Solution conc. | Block no C-series | Absorp. of solution | Retention | Mass loss | Correction fac-tor | Corrected mass loss | Block no C-series | Mass loss controls |
|---|---|---|---|---|---|---|---|---|
| % w/w | | g | kg/m³ | % | | % | | % |
| 0.72 | 1137 | 12.29 | 4.72 | 8.9 | -0.3 | 9.2 | 1131 | 23.7 |
| | 1138 | 12.75 | 4.89 | 8.7 | | 9.0 | 1132 | 22.7 |
| | 1139 | 12.66 | 4.86 | 5.9 | | 6.3 | 1133 | 25.6 |
| | 1140 | 13.06 | 5.01 | 7.9 | | 8.2 | 1134 | 24.3 |
| Mean | | 12.69 | 4.87 | 7.8 | | 8.2 | | 24.1 |
| Std | | 0.32 | 0.12 | 1.3 | | 1.3 | | 1.2 |
| 1.01 | 1147 | 13.38 | 7.22 | 2.0 | -0.5 | 2.5 | 1141 | 30.9 |
| | 1148 | 12.80 | 6.90 | -0.3 | | 0.1 | 1142 | 26.9 |
| | 1149 | 12.70 | 6.85 | 0.8 | | 1.3 | 1143 | 20.8 |
| | 1150 | 13.15 | 7.09 | 1.4 | | 1.9 | 1144 | 27.5 |
| Mean | | 13.01 | 7.02 | 1.0 | | 1.4 | | 26.5 |
| Std | | 0.31 | 0.17 | 1.0 | | 1.0 | | 4.2 |
| 1.43 | 1157 | 12.90 | 9.83 | -0.6 | -1.1 | 0.5 | 1151 | 20.1 |
| | 1158 | 12.72 | 9.69 | 3.0 | | 4.1 | 1152 | 21.9 |
| | 1159 | 12.63 | 9.63 | -0.4 | | 0.7 | 1153 | 23.9 |
| | 1160 | 12.66 | 9.65 | -0.5 | | 0.6 | 1154 | 32.3 |
| Mean | | 12.73 | 9.70 | 0.4 | | 1.5 | | 24.6 |
| Std | | 0.12 | 0.09 | 1.8 | | 1.8 | | 5.4 |

EP 4 356 737 A2

49

Fungus: *Gloeophyllum trabeum* Product N-Butyldiethanolamine Table XVII

| Solution conc. | Block no C-series | Absorp. of solution | Retention | Mass loss | Co rre c-tio n fac-tor | Corrected mass loss | Block no C-series | Mass loss controls |
|---|---|---|---|---|---|---|---|---|
| % w/w | | g | kg/m³ | % | | % | | % |
| 0.00 | 1207 | 10.60 | 0.00 | 35.1 | | 34.6 | 1201 | 22.9 |
| | 1208 | 11.93 | 0.00 | 34.1 | | 33.6 | 1202 | 32.6 |
| | 1209 | 12.19 | 0.00 | 30.4 | 0.5 | 29.9 | 1203 | 41.6 |
| | 1210 | 1221 | 0.00 | 28.9 | | 28.4 | 1204 | 28.7 |
| Mean | | 11.73 | 0.00 | 32.1 | | 31.6 | | 31.4 |
| Std | | 0.76 | 0.00 | 3.0 | | 3.0 | | 7.8 |
| 0.36 | 1217 | 12.61 | 2.41 | 45.0 | | 44.8 | 1211 | 40.5 |
| | 1218 | 12.29 | 2.35 | 30.8 | | 30.6 | 1212 | 33.3 |
| | 1219 | 11.05 | 2.11 | 32.7 | 0.2 | 32.5 | 1213 | 30.3 |
| | 1220 | 10.58 | 2.02 | 34.0 | | 33.8 | 1214 | 41.6 |
| Mean | | 11.63 | 2.22 | 35.6 | | 35.4 | | 36.4 |
| Std | | 0.97 | 0.19 | 6.4 | | 6.4 | | 5.5 |
| 0.51 | 1227 | 12.15 | 3.29 | 35.0 | | 34.8 | 1221 | 39.4 |
| | 1228 | 12.45 | 3.37 | 29.6 | | 29.4 | 1222 | 31.8 |
| | 1229 | 12.66 | 3.43 | 36.6 | 0.2 | 36.4 | 1223 | 32.2 |
| | 1230 | 12.87 | 3.48 | 31.3 | | 31.1 | 1224 | 33.2 |
| Mean | | 12.53 | 3.39 | 33.1 | | 32.9 | | 34.2 |
| Std | | 0.30 | 0.08 | 3.2 | | 3.2 | | 3.6 |

| Solution conc. | Block no C-series | Absorp. of solution | Retention | Mass loss | Correction factor | Corrected mass loss | Block no C-series | Mass loss controls |
|---|---|---|---|---|---|---|---|---|
| % w/w | | g | kg/m³ | % | | % | | % |
| 0.72 | 1237 | 12.75 | 4.89 | 30.6 | -0.3 | 30.9 | 1231 | 48.3 |
| | 1238 | 11.60 | 4.45 | 32.7 | | 33.1 | 1232 | 38.1 |
| | 1239 | 11.80 | 4.53 | 33.8 | | 34.2 | 1233 | 34.7 |
| | 1240 | 12.91 | 4.95 | 26.1 | | 26.5 | 1234 | 35.7 |
| Mean | | 12.26 | 4.71 | 30.8 | | 31.2 | | 39.2 |
| Std | | 0.66 | 0.25 | 3.4 | | 3.4 | | 6.2 |
| 1.01 | 1247 | 12.49 | 6.74 | 21.7 | -0.5 | 22.1 | 1241 | 44.9 |
| | 1248 | 12.83 | 6.92 | 4.8 | | 5.3 | 1242 | 44.2 |
| | 1249 | 12.19 | 6.57 | 9.0 | | 8.5 | 1243 | 46.8 |
| | 1250 | 13.26 | 7.15 | 9.3 | | 9.8 | 1244 | 40.4 |
| Mean | | 12.69 | 6.85 | 11.0 | | 11.4 | | 44.1 |
| Std | | 0.46 | 0.25 | 7.4 | | 7.4 | | 2.7 |
| 1.43 | 1257 | 13.37 | 10.19 | -0.4 | -1.1 | 0.7 | 1251 | 47.1 |
| | 1258 | 12.76 | 9.73 | -0.8 | | 0.3 | 1252 | 40.6 |
| | 1259 | 13.24 | 10.10 | 1.0 | | 2.0 | 1253 | 49.7 |
| | 1260 | 13.24 | 10.09 | 0.9 | | 2.0 | 1254 | 45.9 |
| Mean | | 13.15 | 10.03 | 0.2 | | 1.3 | | 45.8 |
| Std | | 0.27 | 0.21 | 0.9 | | 0.9 | | 3.8 |

EP 4 356 737 A2

Fungus: *Coriolus versicolor* Product N-Butyldiethanolamine Table XVIII

| Solution conc. | Block no C-series | Absorp. of solution | Retention | Mass loss | Correction factor | Corrected mass loss | Block no C-series | Mass loss controls |
|---|---|---|---|---|---|---|---|---|
| % w/w | | g | kg/m³ | % | | % | | % |
| 0.00 | 1307 | 12.77 | 0.00 | 30.5 | 0.8 | 29.7 | 1301 | 25.9 |
| | 1308 | 12.61 | 0.00 | 31.5 | | 30.7 | 1302 | 30.8 |
| | 1309 | 12.97 | 0.00 | 25.9 | | 25.1 | 1303 | 26.2 |
| | 1310 | 11.95 | 0.00 | 30.6 | | 29.8 | 1304 | 35.0 |
| Mean | | 12.57 | 0.00 | 29.6 | | 28.8 | | 29.5 |
| Std | | 0.44 | 0.00 | 2.5 | | 2.5 | | 4.3 |
| 0.55 | 1317 | 12.56 | 3.66 | 32.3 | -0.1 | 32.3 | 1311 | 28.5 |
| | 1318 | 12.44 | 3.62 | 27.5 | | 27.5 | 1312 | 29.7 |
| | 1319 | 1322 | 3.85 | 25.6 | | 25.6 | 1313 | 31_1 |
| | 1320 | 13.21 | 3.85 | 21.8 | | 21.8 | 1314 | 28.7 |
| Mean | | 12.86 | 3.74 | 26.8 | | 26.8 | | 29.5 |
| Std | | 0.42 | 0.12 | 4.4 | | 4.4 | | 1.2 |
| 0.78 | 1327 | 12.62 | 5.24 | 25.9 | -0.1 | 26.0 | 1321 | 29.3 |
| | 1328 | 12.35 | 5.13 | 25.0 | | 25.1 | 1322 | 32.4 |
| | 1329 | 12.91 | 536 | 31.2 | | 31.3 | 1323 | 25.5 |
| | 1330 | 12.88 | 5.35 | 44.6 | | 44.7 | 1324 | 41.6 |
| Mean | | 12.69 | 5.27 | 31.7 | | 31.8 | | 32.2 |
| Std | | 0.26 | 0.11 | 9.0 | | 9.0 | | 6.9 |

EP 4 356 737 A2

(continued)

| Solution conc. | Block no C-series | Absorp. of solution | Retention | Mass loss | Correction factor | Corrected mass loss | Block no C-series | Mass loss controls |
|---|---|---|---|---|---|---|---|---|
| % w/w | | g | kg/m$^3$ | % | | % | | % |
| 1.09 | 1337 | 13.06 | 7.62 | 30.2 | -0.3 | 30.5 | 1331 | 26.0 |
| | 1338 | 12.78 | 7.46 | 29.5 | | 29.8 | 1332 | 26.5 |
| | 1339 | 13.32 | 7.77 | 29.2 | | 29.4 | 1333 | 29.5 |
| | 1340 | 13.49 | 7.87 | 34.6 | | 34.9 | 1334 | 35.8 |
| Mean | | *13.16* | *7.68* | *30.9* | | *31.2* | | *29.5* |
| Std | | *0.31* | *0.18* | *2.5* | | *2.5* | | *4.5* |
| 1.55 | 1347 | 13.45 | 11.14 | 27.8 | -0.9 | 28.6 | 1341 | 29.7 |
| | 1348 | 12.78 | 10.59 | 25.9 | | 26.8 | 1342 | 26.7 |
| | 1349 | 12.93 | 10_71 | 26.4 | | 27.3 | 1343 | 28.3 |
| | 1350 | 13.28 | 11.00 | 29.5 | | 30.3 | 1344 | 25.6 |
| Mean | | *13.11* | *10.86* | *27.4* | | *28.3* | | *27.6* |
| Std | | *0.31* | *0.25* | *1.6* | | *1.6* | | *1.8* |
| 2.20 | 1357 | 13.46 | 15.78 | 14.3 | -1.6 | 15.9 | 1351 | 32.8 |
| | 1358 | 12.84 | 15.06 | 23.0 | | 24.6 | 1352 | 29.2 |
| | 1359 | 12.83 | 15.04 | 35.4 | | 36.9 | 1353 | 27.3 |
| | 1360 | 13.41 | 15_73 | 23.7 | | 25.3 | 1354 | 35.8 |
| Mean | | *13.14* | *15.40* | *24.1* | | *25.7* | | *31.3* |
| Std | | *0.35* | *0.41* | *8.6* | | *8.6* | | *3.8* |

Description of the drawings

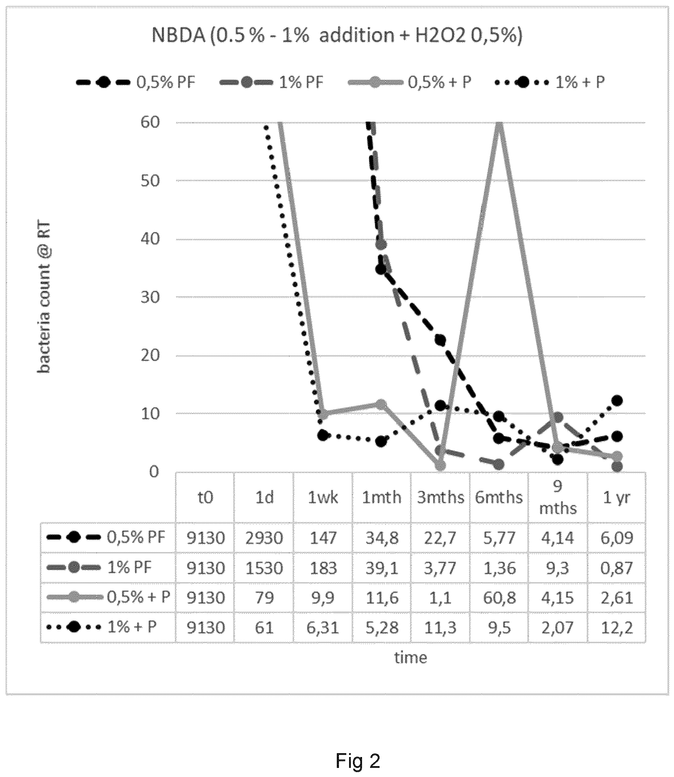

Fig. 2 - 4 show graphs visualizing data on long term effectivity as NBDA as an in-can additive for preservation of paint. In each figure data from 0.5% NBDA and 1% NBDA is shown and compared with data from 0.5% NBDA + 0.5% Hydrogen Peroxide and 1% NBDA + 0.5% Hydrogen Peroxide. In figure 1 - 3 the development in bacterial count over time for the abovementioned additives are carried out at RT, 32°C and 60°C respectively. The starting point is a stained sample i.e. paint with an initial high bacteria count.

It is seen that NBDA is as effective as NBDA + Hydrogen Peroxide for both NBDA concentrations at all three test temperatures long term. It seems that NBDA alone results in a slightly slower drop in bacterial count in the shorter perspective (around a month) but over time NBDA at both 0.5% and 1% reach the same level of bacteria as does the samples also containing Hydrogen Peroxide.

It can be concluded that NBDA even at a concentration 0.5% is highly effective as the sole biocide additive for in-can preservation of paints.

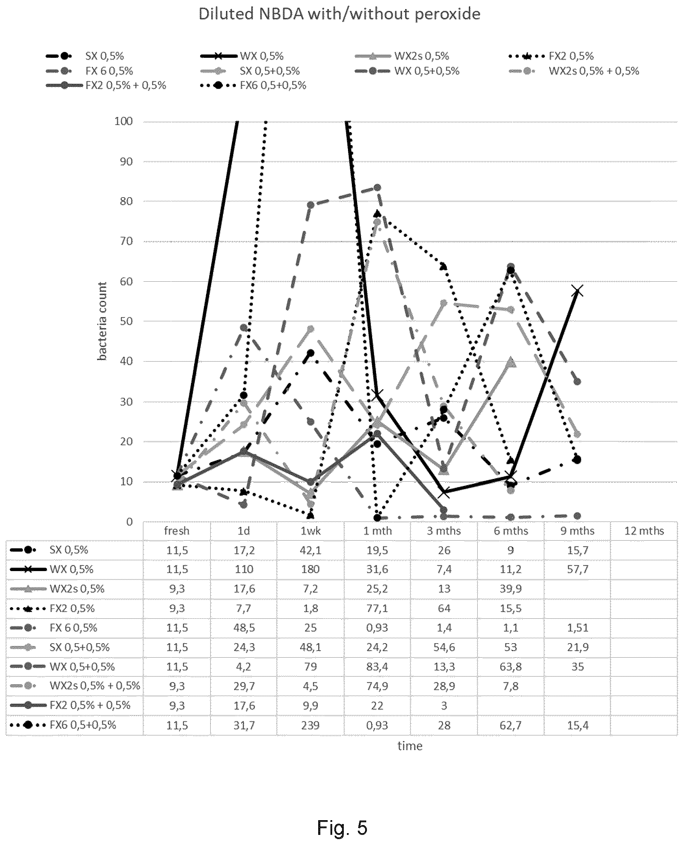

Fig. 5 shows another set of graphs visualizing data on long term effectivity as NBDA as an in-can additive for preservation of paint. The results shown are for the development in bacterial count over time for paint samples containing 0.5% NBDA alone and 0.5% NBDA + 0.5% Hydrogen Peroxide. The initial sample in this set of data has a low bacterial count and it is seen how 0.5% NBDA alone is as effective as 0.5% NBDA + 0.5% Hydrogen peroxide for preventing bacterial growth in paint samples.

**Claims**

1. Use of a secondary or tertiary amine with formula N $R^1$ $R^2$ $R^3$ as biocide, wherein

   - $R^1$ is an unbranched or branched alkyl group with 1-6 C atoms, such as methyl, ethyl, propyl, butyl, pentyl, or hexyl, including any isomer thereof;
   - $R^2$ is H; an unbranched or branched alkyl group with 1-6 C atoms, such as ethyl, propyl, butyl, pentyl, or hexyl, including any isomer thereof; or an unbranched or branched alcohol group with 1-5 C atoms, such as methanol, ethanol, propanol, butanol, and pentanol, including any isomer thereof; and
   - $R^3$ is an unbranched or branched alcohol group with 1-5 C atoms, such as methanol, ethanol, propanol, butanol, and pentanol, including any isomer thereof;

   wherein the biocide is an antimicrobial agent, such as one or more of: bactericide, fungicide, sporicide, algaecide, antiviral, microbially stabilizing agent, including any combination thereof.

2. Use according to claim 1, wherein the amine is a tertiary amine selected from N-methyl diethanolamine (CAS 105-59-9), N-ethyl diethanolamine (CAS 139-87-7), N-propyl diethanolamine (CAS 6735-35-9), N-butyldiethanolamine (CAS 102-79-4), N-t-butyl diethanolamine (CAS 2160-93-2), dimethyl ethanolamine (CAS 108-01-0), diethyl ethanolamine (CAS 100-37-8), dipropylaminoethanol (CAS 3238-75-3), diisopropylethanolamine (CAS 96-80-0), or dibutylethanolamine (CAS 102-81-8).

3. Use according to claim 1 or claim 2, wherein the tertiary amine is N-butyldiethanolamine (CAS 102-79-4).

4. Use according to claim 1, wherein the amine is a secondary amine selected from (i) methyl monoalkanolamine, such as methyl monomethanolamine, methyl monoethanolamine, methyl monopropanolamine, methyl monobutanolamine, or methyl pentanolamine; (ii) ethyl monoalkanolamine, such as ethyl monomethanolamine, ethyl monoethanolamine, ethyl monopropanolamine, ethyl monobutanolamine, or ethyl pentanolamine; (iii) propyl monoalkanolamine, such as propyl monomethanolamine, propyl monoethanolamine, propyl monopropanolamine, propyl monobutanolamine, or propyl pentanolamine; (iv) butyl monoalkanolamine, such as butyl monomethanolamine, butyl monoethanolamine, butyl monopropanolamine, butyl monobutanolamine, or butyl pentanolamine; or (v) pentyl monoalkanolamine, such as pentyl monomethanolamine, pentyl monoethanolamine, pentyl monopropanolamine, pentyl monobutanolamine, or pentyl pentanolamine.

5. Use according to any one of the preceding claims, wherein the biocidal effect is provided by two, or more amine(s) according to the any one of the preceding claims, such as a combination comprising or consisting of one or more secondary amine(s), one or more tertiary amine(s); or a combination of one or more secondary amine(s) and one or more tertiary amine(s).

**6.** Use according to any one of the preceding claims, wherein the secondary and/or tertiary amine is provided in a concentration of 0.01-10.0, 0.1-5.0, 0.2-2.0, 0.4-1.5, or 0.5-1.0% by weight, and/or at least 0.01, 0.02, 0.05, 0.1, 0.2, 0.5, 1.0, 2.0, 5.0% by weight, or more; and optionally further comprising one or more peroxide(s), such as hydrogen peroxide, a peroxide and/or one or more peroxide comprising stabilized compound, including any combinations thereof, wherein the one or more peroxide is provided in a concentration of 0.001-2.0, 0.002-1.5, 0.005-1.0, 0.01-1.0, or 0.05-0.5% by weight, and/or at least 0.001, 0.002, 0.005, 0.01, 0.2, 0.5, 1.0, or 0.05-0.5% per weight, or more.

**7.** A microbially stable composition or product comprising a secondary and/or tertiary amine according to any one of the preceding claims, such as N-butyldiethanolamine, wherein said composition or product is a personal care product, home care product, cosmetical, paint, glue, coating, solvent, spray, dispersion, emulsion, suspension, suspoemulsion, soap, detergent, household or industrial cleaning agent, paste, gel, lubricant, cooling fluid, contact-cooling system, aqueous system, glue, precoat, topcoat, peelable coat, primer, metal primer, paint, stoving paint, wood preservation, coating for printed circuit boards, coating for singular application as well as compound manufacture of film, foil, woven or nonwoven textile, carpet backing, flooring solution, binder for fibres, artificial grass, concrete sealer, dust binder, sound dampening compound coating for use in architectural or in situ mechanical systems, feed product, food product, pesticide, medicament, or pharmaceutical,
wherein the secondary and/or tertiary amine according to any one of the preceding claims provides:

    (x) elimination of microbial activity, such as a reduction in viable cell count (VCC) by at least 3, 4, 5 or 6 log units);
    (y) a long-term provision of a microbe-free environment (e.g. < 10 VCC ml or g); and/or
    (z) a resistance to postproduction contamination.

**8.** Composition or product according to claim 7, wherein said composition or product is a dispersion comprising polyvinylbutural (PVB), such as one or more of recycled PVB (rPVB), modified PVB (mPVB), and/or crosslinked PVB (PVBX).

**9.** Composition or product according to claim 7 or 8, further comprising one or more peroxide(s), such as hydrogen peroxide and/or one or more peroxide stabilized compound (s), wherein the one or more peroxide is provided in a concentration of 0.001-2.0, 0.002-1.5, 0.005-1.0, 0.01-1.0, or 0.05-0.5% by weight, and/or at least 0.001, 0.002, 0.005, 0.01, 0.2, 0.5, 1.0, or 0.05-0.5% per weight, or more.

**10.** Composition or product according to any one of claims 7-9, comprising

    - 1-70, 2-60, or 5-55% PVB; and
    - 0.2-40, 0.5- 30, or 1-20% emulsifier selected from fatty acid soaps, unsaturated C3-C22 carboxylic acid(s), and saturated C3- C22 carboxylic acid(s).

**11.** Composition or product according to any one of claims 7-10, wherein the microbial stability is provided by N-butyl diethanolamine.

**12.** A method for substituting or replacing a conventional biocide in a composition or product, said method comprising the step of:

    - replacing said conventional biocide with a sec. or tert. amine according to any one of claims 1-6 in an active amount, and optionally
    - adjusting the pH;

wherein said conventional biocide is selected from the group consisting of: (i) iso-thiazoline(s), in particular methylisothiazolinone (MIT), benzisothiazolinone (BIT), methylchloroisothiazolinone (MCI), chloromethyl-methylisothiazolone (CMIT), and/or octhilinone (OIT); (ii) halogens and/or halogen-comprising compounds and/or compositions, in particular compositions or compounds comprising Cl, Br, and/or J; (iii) heavy metals including salts, in particular Ag, Zn, Zr, Cu, Sn, including inorganic and organic compounds, such as colloidal silver, silver nitrate, mercury chloride, phenyl mercury salts, copper sulphate, copper oxide-chloride; (iv) phenolic biocide, e.g. phenol(s), cresol(s), xylenol(s), tri- and tetra-methylphenol(s), propyl/butyl phenol(s), methyl resorcinol(s), naphthols, neutral hydrocarbon tar oils, bis-phenols, chlorophenols, trichlorophenol(s), pentachlorophenol, triclosan 2-phenylphenol; and/or (v) other compounds, such as formaldehyde.

13. A method according to claim 12, wherein the composition or product is a personal care product, home care product, cosmetical, paint, glue, coating, solvent, spray, dispersion, emulsion, suspension, suspoemulsion, soap, detergent, household or industrial cleaning agent, paste, gel, lubricant, cooling fluid, heat exchange fluid, contact-cooling system, aqueous system, glue, precoat, topcoat, peelable coat, primer, metal primer, paint, stoving paint, wood preservation, coating for printed circuit boards, coating for singular application as well as compound manufacture of film, foil, woven or nonwoven textile, carpet backing, flooring solution, binder for fibres, artificial grass, concrete sealer, dust binder, sound dampening compound coating for use in architectural or in situ mechanical systems, feed product, food product, pesticide, medicament, or pharmaceutical.

14. Composition or product according to any one of claims 7-11, or provided by a method according to claim 12 or 13, wherein said composition or product meets or exceeds one or more requirement(s) for AgBB, Ecolabel, The Swann label, Blue Angel label and/or Greenguard Standard(s).

15. Composition or product according to any one of claims 7-11, 14, or provided by a method according to claim 12 or 13, wherein said composition or product does not comprise one or more organic compound(s) having an initial boiling point of 250°C or below measured at a standard atmospheric pressure of 101.3 kPa.

Fig. 1

## NBDA (0.5 % - 1% addition + H2O2 0,5%)

| | t0 | 1d | 1wk | 1mth | 3mths | 6mths | 9 mths | 1 yr |
|---|---|---|---|---|---|---|---|---|
| 0,5% PF | 9130 | 2930 | 147 | 34,8 | 22,7 | 5,77 | 4,14 | 6,09 |
| 1% PF | 9130 | 1530 | 183 | 39,1 | 3,77 | 1,36 | 9,3 | 0,87 |
| 0,5% + P | 9130 | 79 | 9,9 | 11,6 | 1,1 | 60,8 | 4,15 | 2,61 |
| 1% + P | 9130 | 61 | 6,31 | 5,28 | 11,3 | 9,5 | 2,07 | 12,2 |

Fig 2

Fig. 3

Fig. 4

## Diluted NBDA with/without peroxide

| | fresh | 1d | 1wk | 1 mth | 3 mths | 6 mths | 9 mths | 12 mths |
|---|---|---|---|---|---|---|---|---|
| SX 0,5% | 11,5 | 17,2 | 42,1 | 19,5 | 26 | 9 | 15,7 | |
| WX 0,5% | 11,5 | 110 | 180 | 31,6 | 7,4 | 11,2 | 57,7 | |
| WX2s 0,5% | 9,3 | 17,6 | 7,2 | 25,2 | 13 | 39,9 | | |
| FX2 0,5% | 9,3 | 7,7 | 1,8 | 77,1 | 64 | 15,5 | | |
| FX 6 0,5% | 11,5 | 48,5 | 25 | 0,93 | 1,4 | 1,1 | 1,51 | |
| SX 0,5+0,5% | 11,5 | 24,3 | 48,1 | 24,2 | 54,6 | 53 | 21,9 | |
| WX 0,5+0,5% | 11,5 | 4,2 | 79 | 83,4 | 13,3 | 63,8 | 35 | |
| WX2s 0,5% + 0,5% | 9,3 | 29,7 | 4,5 | 74,9 | 28,9 | 7,8 | | |
| FX2 0,5% + 0,5% | 9,3 | 17,6 | 9,9 | 22 | 3 | | | |
| FX6 0,5+0,5% | 11,5 | 31,7 | 239 | 0,93 | 28 | 62,7 | 15,4 | |

time

## Fig. 5

**EP 4 356 737 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS,* 102-79-4
- *CHEMICAL ABSTRACTS,* 105-59-9
- *CHEMICAL ABSTRACTS,* 139-87-7
- *CHEMICAL ABSTRACTS,* 108-01-0
- *CHEMICAL ABSTRACTS,* 100-37-8
- *CHEMICAL ABSTRACTS,* 3238-75-3
- *CHEMICAL ABSTRACTS,* 96-80-0
- *CHEMICAL ABSTRACTS,* 102-81-8